(19) Europäisches Patentamt
European Patent Office
Office européen des brevets

(11) EP 2 814 865 B1

(12) **EUROPEAN PATENT SPECIFICATION**

(45) Date of publication and mention
of the grant of the patent:
**12.12.2018 Bulletin 2018/50**

(51) Int Cl.:
*C08G 63/08* [(2006.01)]   *C08G 85/00* [(2006.01)]
*C08L 101/16* [(2006.01)]

(21) Application number: **13749114.8**

(22) Date of filing: **25.01.2013**

(86) International application number:
**PCT/JP2013/052294**

(87) International publication number:
**WO 2013/121895 (22.08.2013 Gazette 2013/34)**

(54) **METHOD FOR PRODUCING POLYMER AND POLYMER PRODUCT**

VERFAHREN ZUR HERSTELLUNG VON POLYMER UND POLYMERPRODUKT

PROCÉDÉ DE FABRICATION D'UN POLYMÈRE ET PRODUIT DE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2012 JP 2012029299**
**31.08.2012 JP 2012191193**

(43) Date of publication of application:
**24.12.2014 Bulletin 2014/52**

(73) Proprietor: **Ricoh Company, Ltd.**
**Tokyo 143-8555 (JP)**

(72) Inventors:
• **NEMOTO, Taichi**
**Tokyo 143-8555 (JP)**
• **TANAKA, Chiaki**
**Tokyo 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**WO-A1-2013/024834      JP-A- 2004 277 698**
**JP-A- 2007 191 546      JP-A- 2010 037 378**
**JP-A- 2010 070 589      JP-A- 2011 208 115**
**JP-A- 2011 208 116      JP-A- 2011 256 475**
**JP-A- 2012 007 115      JP-A- 2012 041 401**
**JP-A- 2012 188 664**

• **GANAPATHY ET AL: "Ring-opening polymerization of l-lactide in supercritical carbon dioxide using PDMS based stabilizers", EUROPEAN POLYMER JOUR, PERGAMON PRESS LTD. OXFORD, GB, vol. 43, no. 1, 14 December 2006 (2006-12-14), pages 119-126, XP005803548, ISSN: 0014-3057, DOI: 10.1016/J.EURPOLYMJ.2006.10.009**

EP 2 814 865 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a method for producing a polymer through ring-opening polymerization of a ring-opening polymerizable monomer.

Background Art

Conventionally known methods for producing polymers involve ring-opening polymerization of a ring-opening polymerizable monomer using a metal catalyst. For example, disclosed is a method for producing polylactic acid by allowing polymerization raw materials mainly containing lactide as a ring-opening polymerizable monomer to react for polymerization in a melted state (see PTL 1). In accordance with the disclosed method, lactide is reacted in a melted state to polymerize using tin octylate as a metal catalyst and setting the reaction temperature to 195°C.

In the case where polylactic acid is produced in this method, however, more than 2% by weight of lactide remains in a produced polymer product (see PTL 1). This is because an equilibrium relationship between the ring-opening polymerizable monomer and a polymer is established in a reaction system of ring-opening polymerization of polylactic acid or the like, and therefore a ring-opening polymerizable monomer tends to be generated by a depolymerization reaction, which is a reverse reaction of a ring-opening polymerization reaction, when it is polymerized at high temperature. The residual lactide acts as a catalyst for hydrolysis of the generated polymer product, or may impair thermal resistance of the polymer product.

As for a method for performing ring-opening polymerization of a ring-opening polymerizable monomer at low temperature, disclosed is a method for carrying out ring-opening polymerization of lactide in an organic solvent (see PTL 2). In accordance with the disclosed method, D-lactide is polymerized in a dichloromethane solution at 25°C, to thereby yield poly-D-lactic acid with the polymerization of the monomer being 99.4%. In the case where the polymerization is carried out in an organic solvent, however, it is necessary to provide a step for drying the organic solvent after the polymerization, and moreover it is difficult to completely remove the organic solvent from a produced polymer product even after the drying step.

As for a method for performing ring-opening polymerization of a ring-opening polymerizable monomer at low temperature without using an organic solvent, disclosed is a method for carrying out polymerization of L-lactide in supercritical carbon dioxide using a metal catalyst (see NPL 1). In accordance with the disclosed method, L-lactide in an amount of 10 w/v% relative to supercritical carbon dioxide is polymerized for 47 hours using tin octylate as a metal catalyst at a reaction temperature of 80°C and a pressure of 207 bar, to thereby produce particles of polylactic acid at a yield of 85%. In this case, the supercritical carbon dioxide used is turned into gas when the temperature and the pressure are returned to normal temperature and normal pressure, and thus it is not necessary to perform a treatment of removing a solvent after polymerization.

Citation List

Patent Literature

PTL 1: Japanese Patent Application Laid-Open (JP-A) No. 08-259676
PTL 2: JP-A No. 2009-1614

Non-Patent Literature

NPL 1: Ganapathy, H. S.;Hwang, H. S.; Jeong, Y. T.; LEE, W-T.; Lim, K. T. Eur Polym J. 2007, 43(1), 119-126.

Summary of Invention

Technical Problem

However, when a ring-opening polymerizable monomer is polymerized using a metal catalyst in a compressive fluid by a conventional production method, there are problems that it takes a long time to complete polymerization reaction and production yield becomes low.

The present invention aims to solve the various problems in the art, and achieve the following object. An object of the present invention is to provide a method for producing a polymer, which makes time required for polymerization reaction shorter than that required in the case where ring-opening polymerization of a ring-opening polymerizable monomer is performed using a compressive fluid by a conventional production method.

Solution to Problem

Means for solving the above problems are as follows.

That is, a method for producing a polymer of the present invention contains:
bringing a compressive fluid and raw materials consisting of a ring-opening polymerizable monomer and an initiator into contact with each other at a mixing ratio represented by the following formula, to thereby allow the ring-opening polymerizable monomer to carry out ring-opening polymerization in the presence of a metal catalyst:

$$1 \; > \; \frac{\text{Mass of the raw materials}}{\text{Mass of the raw materials} + \text{Mass of the compressive fluid}} \; \geq \; 0.5$$

Advantageous Effects of Invention

As described above, the method for producing a polymer of the present invention contains a polymerization step of bringing a compressive fluid and raw materials containing a ring-opening polymerizable monomer into contact with each other at a predetermined mixing ratio, to thereby allow the ring-opening polymerizable monomer to carry out ring-opening polymerization in the presence of a metal catalyst. The method of the present invention containing such a polymerization step can make time required for polymerization reaction shorter than that required in the case where ring-opening polymerization of a ring-opening polymerizable monomer is performed using a compressive fluid by a conventional production method.

Brief Description of Drawings

FIG. 1 is a general phase diagram depicting the state of a substance depending on pressure and temperature conditions.
FIG. 2 is a phase diagram which defines a compressive fluid used in the present embodiment.
FIG. 3 is a system diagram illustrating one example of a polymerization step used in the present embodiment.
FIG. 4 is a system diagram illustrating one example of a polymerization step used in the present embodiment.
FIG. 5 is a system diagram illustrating one example of a polymerization step used in the present embodiment.
FIGs. 6A and 6B are each a schematic diagram of a system for producing a complex in the present embodiment.
FIG. 7 is a schematic diagram of a system for producing a complex in the present embodiment.

Description of Embodiments

[First Embodiment]

(Method for Producing Polymer)

One embodiment of the present invention will be specifically explained hereinafter.

The method for producing a polymer of the present embodiment contains at least a polymerization step, and may further contain appropriately selected other steps.

The method for producing a polymer may be of a batch-type, or a continuous-type.

<Polymerization Step (Batch-type)>

In the case where the method for producing a polymer is of a batch-type, the polymerization step is a step of bringing a compressive fluid and raw materials consisting of a ring-opening polymerizable monomer and an initiator into contact with each other at a mixing ratio represented by the following formula, to thereby allow the ring-opening polymerizable monomer to carry out ring-opening polymerization in the presence of a metal catalyst:

$$1 \; > \; \frac{\text{Mass of the raw materials}}{\text{Mass of the raw materials} + \text{Mass of the compressive fluid}} \; \geq \; 0.5$$

<Polymerization Step (Continuous-type)>

In the case where the method for producing a polymer is of a continuous-type, the polymerization step is a step of continuously supplying and bringing a compressive fluid and raw materials consisting of a ring-opening polymerizable monomer and an initiator into contact with each other under the following conditions, to thereby allow the ring-opening polymerizable monomer to carry out ring-opening polymerization in the presence of a metal catalyst and continuously generate a polymer:

$$1 \; > \; \frac{\text{Feeding speed of the raw materials (g/min)}}{\text{Feeding speed of the raw materials (g/min)} + \text{Feeding speed of the compressive fluid (g/min)}} \; \geq \; 0.5$$

-Raw Materials-

Substances, such as a ring-opening polymerizable monomer, used as raw materials in the aforementioned production method will be explained.

In the present embodiment, the raw materials are materials for producing a polymer and are materials that become constitutional components of a polymer. Moreover, the raw materials consist of a ring-opening polymerizable monomer, and an initiator.

--Ring-Opening Polymerizable Monomer--

The ring-opening polymerizable monomer for use in the present embodiment is appropriately selected depending on the intended purpose without any limitation, and although it may depend on a combination of the ring-opening polymerizable monomer and a compressive fluid, the ring-opening polymerizable monomer is preferably a monomer having a ring structure containing a carbonyl bond, such as an ester bond. The carbonyl bond is formed with oxygen, which has high electronegativity, and carbon bonded together with a π-bond. Because of electrons of the π-bond, oxygen is negatively polarized, and carbon is positively polarized, and therefore enhances reactivity. In the case where the compressive fluid is carbon dioxide, it is assumed that affinity between carbon dioxide and a generated polymer is high, as the carbonyl bond is similar to the structure of carbon dioxide. As a result of these functions, a plasticizing effect of the generated polymer using the compressive fluid is enhanced. Examples of such ring-opening polymerizable monomer include cyclic ester, and cyclic carbonate. A polymer product producing using the aforementioned ring-opening polymerizable monomer is, for example, polyester or polycarbonate containing a carbonyl bond, such as an ester bond and a carbonate bond.

The cyclic ester is not particularly limited, but it is preferably a cyclic dimer obtained through dehydration-condensation of an L-form and/or D form of a compound represented by General Formula 1.

R-C*-H(-OH)(-COOH)                General Formula 1

In General Formula 1, R is a C1-C10 alkyl group, and "C*" represents an asymmetric carbon.

Specific examples of the compound represented by General Formula 1 include enantiomers of lactic acid, enantiomers of 2-hydroxybutanoic acid, enantiomers of 2-hydroxypentanoic acid, enantiomers of 2-hydroxyhexanoic acid, enantiomers of 2-hydroxyheptanoic acid, enantiomers of 2-hydroxyoctanoic acid, enantiomers of 2-hydroxynonanoic acid, enantiomers of 2-hydroxydecanoic acid, enantiomers of 2-hydroxyundecanoic acid, and enantiomers of 2-hydroxydodecanoic acid. Among them, enantiomers of lactic acid are preferable since they are highly reactive and readily available. These cyclic dimers may be used independently or in combination.

Examples of the cyclic ester other than the compound represented by General Formula 1 include aliphatic lactone, such as β-propiolactone, β-butyrolactone, γ-butyrolactone, γ-hexanolactone, γ-octanolactone, δ-valerolactone, δ-hexanolactone, δ-octanolactone, ε-caprolactone, δ-dodecanolactone, α-methyl-γ-butyrolactone, β-methyl-δ-valerolactone, glycolide and lactide. Among them, ε-caprolactone is particularly preferable since it is highly reactive and readily available.

The cyclic carbonate is not particularly limited, and examples thereof include ethylene carbonate, and propylene carbonate. These ring-opening polymerizable monomers may be used independently, or in combination.

-Metal Catalyst-

The metal catalyst used in the production method of the present embodiment may be appropriately selected depending on the intended purpose without any limitation so long as it is a catalyst containing a metal atom. It is, for example, an organic compound containing a metal atom. Such metal catalysts are not particularly limited, and examples thereof include: a tin compound, such as tin octylate, tin dibutylate, and tin di(2-ethylhexanoate); an aluminum compound, such as aluminum acetylacetonate, and aluminum acetate; a titanium compound, such as tetraisopropyl titanate, and tetrabutyl titanate; a zirconium compound, such as zirconium isopropoxide; and an antimony compound, such as antimony trioxide.

The amount of the metal catalyst added may be appropriately selected without any limitation depending on, for example, the type of the metal catalyst and the type of the ring-opening polymerizable monomer. For example, when ring-opening polymerization of lactide is performed using tin octylate, the amount of the tin octylate is preferably 0.005 mol% to 0.5 mol%, more preferably 0.01 mol% to 0.2 mol%, relative to 100 mol% of lactide.

Since the metal catalyst is highly durable to high-temperature conditions, the temperature upon reaction can be set to be high. For example, in a polymerization system where the molecular weight of a resultant product is high and the viscosity increases considerably, performing polymerization reaction at a high temperature can prevent termination of the polymerization reaction due to the increased viscosity.

---Initiator---

In the present embodiment, an initiator is suitable used for controlling a molecular weight of a polymer as obtained. As for the initiator, a conventional initiator can be used. The initiator may be, for example, aliphatic mono or di alcohol, or polyhydric alcohol, as long as it is alcohol-based, and may be either saturated or unsaturated. Specific examples of the initiator include: monoalcohol such as methanol, ethanol, propanol, butanol, pentanol, hexanol, heptanol, nonanol, decanol, lauryl alcohol, myristyl alcohol, cetyl alcohol, and stearyl alcohol; dialcohol such as ethylene glycol, 1,2-propanediol, 1,3-propanediol, 1,3-butanediol, 1,4-butanediol, hexanediol, nonanediol, tetramethylene glycol, and polyethylene glycol; polyhydric alcohol such as glycerol, sorbitol, xylitol, ribitol, erythritol, and triethanol amine; and others such as methyl lactate, and ethyl lactate.

Moreover, a polymer having an alcohol residue at a terminal thereof, such as polycaprolactonediol and polytetramethylene glycol, may be used as the initiator. A use of such polymer enables to synthesize diblock copolymers or triblock compolymers.

An amount of the initiator may be appropriately adjusted depending on the intended molecular weight of a resulting polymer, but it is preferably 0.05 mol% to 5 mol%, relative to 100 mol% of the ring-opening polymerizable monomer. In order to prevent a reaction from being initiated unevenly, the initiator is preferably sufficiently mixed with the monomer before the monomer is brought into contact with a polymerization catalyst.

---Additive---

Moreover, an additive may be added for the ring-opening polymerization, if necessary. Examples of the additive include a surfactant, an antioxidant, a stabilizer, an anticlouding agent, a UV ray-absorber, a pigment, a colorant, inorganic particles, various fillers, a thermal stabilizer, a flame retardant, a crystal nucleating agent, an antistatic agent, a surface wet improving agent, an incineration adjuvant, a lubricant, a natural product, a releasing agent, a plasticizer, and other similar components. If necessary, a polymerization terminator (e.g., benzoic acid, hydrochloric acid, phosphoric acid, metaphosphoric acid, acetic acid and lactic acid) may be used after completion of polymerization reaction. An amount of the additives varies depending on intended purpose for adding the additive, or a type of the additives, but it is preferably 0 parts by mass to 5 parts by mass, relative to 100 parts by mass of the polymer composition.

The surfactant for use is preferably a surfactant which is dissolved in the compressive fluid, and has compatibility to both the compressive fluid and the ring-opening polymerizable monomer. Use of such surfactant can give effects that the polymerization reaction can be uniformly preceded, and the resultant polymer has a narrow molecular weight distribution and be easily produced as particles. When the surfactant is used, the surfactant may be added to the compressive fluid, or may be added to the ring-opening polymerizable monomer. In the case where carbon dioxide is used as the compressive fluid, for example, a surfactant having groups having affinity with carbon dioxide and groups having affinity with the monomer can be used. Examples of such surfactant include a fluorosurfactant, and a silicone surfactant.

As for the stabilizer, used are epoxidized soybean oil, and carbodiimide. As for the antioxidant, 2,6-di-t-butyl-4-methyl phenol, and butylhydroxyanisol are used. As for the anticlouding agent, glycerin fatty acid ester, and monostearyl citrate are used. As for the filler, a thermal stabilizer, a flame retardant, an internal mold release agent, and inorganic additives having an effect of a crystal nucleus agent (e.g., clay, talc, and silica) are used. As for the pigment, titanium oxide, carbon black, and ultramarine blue are used.

-Compressive Fluid-

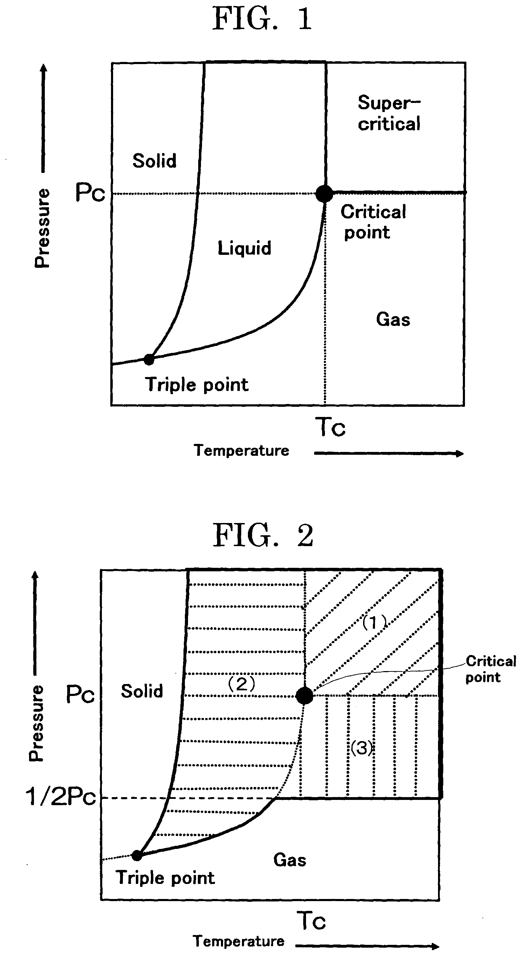

Next, a compressive fluid for use in the method for producing a polymer of the present embodiment is explained with reference to FIGs. 1 and 2. FIG. 1 is a phase diagram depicting the state of a substance depending on pressure and temperature conditions. FIG. 2 is a phase diagram which defines a compressive fluid used in the present embodiment. In the present embodiment, the term "compressive fluid" refers to a state of a substance present in any one of the regions (1), (2) and (3) of FIG. 2 in the phase diagram of FIG. 1.

In such regions, the substance is known to have extremely high density and show different behaviors from those shown at normal temperature and normal pressure. Note that, a substance is a supercritical fluid when it is present in the region (1). The supercritical fluid is a fluid that exists as a noncondensable high-density fluid at temperature and pressure exceeding the corresponding critical points, which are limiting points at which a gas and a liquid can coexist. When a substance is in the region (2), the substance is a liquid, but in the present embodiment, it is a liquefied gas obtained by compressing a substance existing as a gas at normal temperature (25°C) and ambient pressure (1 atm). When a substance is in the region (3), the substance is in the state of a gas, but in the present invention, it is a high-pressure gas whose pressure is 1/2 or higher than the critical pressure (Pc), i.e. 1/2Pc or higher.

Examples of a substance that can be used in the state of the compressive fluid include carbon monoxide, carbon dioxide, dinitrogen oxide, nitrogen, methane, ethane, propane, 2,3-dimethylbutane, and ethylene. Among them, carbon dioxide is preferable because the critical pressure and critical temperature of carbon dioxide are respectively about 7.4 MPa, and about 31°C, and thus a supercritical state of carbon dioxide is easily formed. In addition, carbon dioxide is non-flammable, and therefore it is easily handled. These compressive fluids may be used independently, or in combination.

«Polymerization Reaction Device»

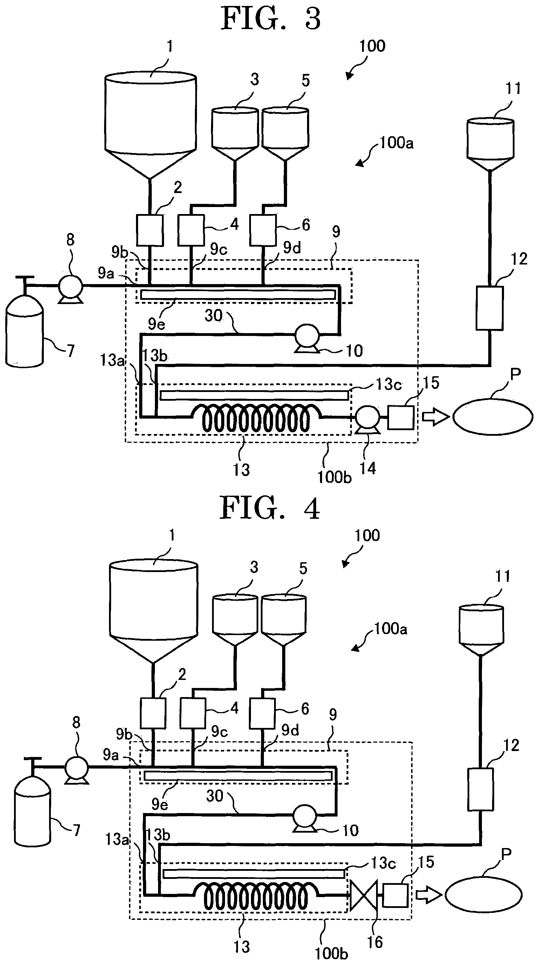

A polymerization reaction device suitably used in the method for producing a polymer of the present embodiment will be explained with reference to FIGs. 3 to 5 next. FIGs. 3 to 5 are each a system diagram illustrating one example of the polymerization step in the present embodiment.

«<Continuous-Type Polymererization Reaction Device»>

First, a continuous-type polymererization reaction device 100 illustrated in FIG. 3 will be explained. In the system diagram of FIG. 3, the polymerization reaction device 100 contains: a supply unit 100a for supplying raw materials, such as a ring-opening polymerizable monomer, and a compressive fluid; and a main body of the polymerization reaction device 100b configured to allow the ring-opening polymerizable monomer supplied by the supply unit 100a to carry out polymerization. The supply unit 100a contains tanks (1, 3, 5, 7, 11), metering feeders (2, 4), and metering pumps (6, 8, 12). The main body of the polymerization reaction device 100b contains a contact section 9 provided at one end of the main body of the polymerization reaction device 100b, a liquid transfer pump 10, a reaction section 13, a metering pump 14, and a discharge nozzle 15 provided at the other end of the main body of the polymerization reaction device 100b.

The tank 1 of the supply unit 100a stores the ring-opening polymerizable monomer. The ring-opening polymerizable monomer to be stored may be a powder, or in the liquid state. The tank 3 stores solid (powderous or granular) materials among the initiator and additives. The tank 5 stores liquid materials among the initiator and additives. The tank 7 stores the compressive fluid. Note that, the tank 7 may store a gas or solid that becomes a compressive fluid by application of heat or pressure during the process of supplying to the contact section 9, or in the contact section 9. In this case, the gas or solid stored in the tank 7 may be formed in the state of (1), (2), or (3) depicted in the phase diagram of FIG. 2, within the contact section 9 upon application of heat or pressure.

The metering feeder 2 measures the ring-opening polymerizable monomer stored in the tank 1 and continuously supplies the measured ring-opening polymerizable monomer to the contact section 9. The metering feeder 4 measures the solid materials stored in the tank 3 and continuously supplies the measured solid materials to the contact section 9. The metering pump 6 measures the liquid materials stored in the tank 5 and continuously supplies the measured liquid materials to the contact section 9. The metering pump 8 continuously supplies the compressive fluid stored in the tank 7 at the constant pressure and flow rate into the contact section 9. Note that, in the present embodiment, "continuously supply" is a concept in contrast to a method for supplying per batch, and means supplying a respective material in the manner that a polymer polymerized by ring-opening polymerization is continuously obtained. Namely, each material can be supplied intermittently, as long as a polymer polymerized by ring-opening polymerization can be continuously obtained. In the case where the initiator and additives are all solids, the polymerization reaction device 100 may not contains the tank 5 and metering pump 6. Similarly, in the case where the initiator and additives are all liquids, the polymerization reaction device 100 may not contain the tank 3 and metering feeder 4.

In the present embodiment, a polymerization reaction device 100b is a tubular device having a monomer inlet for introducing a ring-opening polymerizable monomer, which is disposed at one end of the device, and having a polymer outlet discharging a polymer obtained through polymerization of the ring-opening polymerizable monomer, which is disposed at the other end of the device. Further, at the one end of the polymerization reaction device 100b, a compressive fluid inlet for introducing a compressive fluid is further provided, and a catalyst inlet for introducing a metal catalyst is provided between the one end and the other end of the device. The devices equipped with the main body of polymerization reaction device 100b are each connected through a pressure resistant pipe 30 for transporting the raw materials, compressive fluid, or polymer product, as illustrated in FIG. 3. Moreover, each device of the contact section 9, liquid transfer pump 10 and reaction section 13 of the polymerization reaction device contains a tubular member for passing the raw materials through.

The contact section 9 of the main body of polymerization reaction device 100b is a device contains a pressure resistant device or a tube configured to continuously bring the raw materials (e.g. the ring-opening polymerizable monomer, initiator, and additives) supplied from the tanks (1, 3, 5) into contact with the compressive fluid supplied from the tank 7. In the contact section 9, the raw materials are melted or dissolved by bringing the raw materials into contact with a compressive fluid. In the present embodiment, the term "melt" means that raw materials or a generated polymer is plasticized or liquidized with swelling as a result of the contact between the raw materials or generated polymer, and the compressive fluid. Moreover, the term "dissolve" means that the raw materials are dissolved in the compressive fluid. When the ring-opening polymerizable monomer is dissolved, a fluid phase is formed. When the ring-opening polymerizable monomer is melted, a molten phase is formed. It is however preferred that a molten phase or fluid phase be formed with one phase in order to uniformly carry out a reaction. Moreover, it is preferred that the ring-opening polymerizable monomer be melted in order to carry out a reaction with a high ratio of the raw materials relative to the compressive fluid. In accordance with the present embodiment, the raw materials, such as a ring-opening polymerizable monomer, and a compressive fluid can be continuously brought into contact with each other at a constant concentration rate in the contact section 9 by continuously supplying the raw material and the compressive fluid. As a result, the raw materials are efficiently melted or dissolved.

The contact section 9 may be composed of a tank-shape device, or a tubular device, but it is preferably a tube from one end of which the raw materials are supplied and from the other end of which the mixture, such as a molten phase and a fluid phase, is taken out. Further, the contact section 9 may be provided with a stirring device for stirring the raw materials, and compressive fluid. Examples of such a stirring device preferably used include a single screw stirring device, a twin-screw stirring device where screws are engaged with each other, a biaxial mixer containing a plurality of stirring elements which are engaged or overlapped with each other, a kneader containing spiral stirring elements which are engaged with each other, or a stick mixer. Among them, the two-axial or multi-axial stirring device stirring elements of which are engaged with each other is more preferable because there is generated a less amount of the depositions of the reaction product onto the stirring device or container, and it has self-cleaning properties. In the case where the contact section 9 does not contain a stirring device, the contact section 9 is partially composed of a pressure resistant pipe 30. Note that, in the case of the contact section 9 composed of the pipe 30, the ring-opening polymerizable monomer supplied to the contact section 9 is preferably turned into the liquid state in advance to surely mix all the materials in the contact section 9.

The contact section 9 is provided with an inlet 9a for introducing a compressive fluid supplied from the tank 7 by the metering pump 8, an inlet 9b for introducing the ring-opening polymerizable monomer supplied from the tank 1 by the metering feeder 2, an inlet 9c for introducing the powder supplied from the tank 3 by the metering feeder 4, and an inlet 9d for introducing the liquid supplied from the tank 5 by the metering pump 6. In the present embodiment, each inlet (9a, 9b, 9c, 9d) is composed of a connector for connecting a tubular member, such as a part of a cylinder or pipe 30 for supplying the raw materials through to the contact section 9, with each pipe for transporting each of the raw materials or compressive fluid. The connector is not particularly limited, and is selected from conventional reducers, couplings, Y, T, and outlets. The contact section 9, moreover, contains a heater 9e for heating each of the supplied raw materials and compressive fluid.

The liquid transfer pump 10 sends the mixture, such as a molten phase or a fluid phase formed in the contact section 9, to the reaction section 13. The tank 11 stores a metal catalyst. The metering pump 12 measures the metal catalyst stored in the tank 11 and supply the measured catalyst to the reaction section 13.

The reaction section 13 is composed of a pressure resistant device or tube for mixing the raw materials sent by the liquid transfer pump 10, with the metal catalyst supplied by the metering pump 12, to thereby carry out ring-opening polymerization of the ring-opening polymerizable monomer. The reaction section 13 may be composed of a tank-shaped device or a tubular device, but it is preferably a tubular device as it gives a less dead space. Further, the reaction section 13 may be provided with a stirring device for stirring the raw materials, and compressive fluid. The stirring device of the reaction section 13 is preferably a dual- or multi-axial stirring device having screws engaging with each other, stirring elements of 2-flights (ellipse), stirring elements of 3-flights (triangle), or circular or multi-leaf shape (clover shape) stirring wings, in view of self-cleaning. In the case where raw materials including the metal catalyst are sufficiently mixed in advance, a motionless mixer, which divides the flow and compounds (recombines the flows in multiple stages), can also be used as a stirring device. Examples of the motionless mixer include: multiflux batch mixers disclosed in Japanese examined patent application publication (JP-B) Nos. 47-15526, 47-15527, 47-15528, and 47-15533; a Kenics-type (static) mixer disclosed in JP-A No. 47-33166; and motionless mixers similar to those listed without a moving part. In the case where the reaction section 13 is not equipped with a stirring device, the reaction section 13 is composed of a part of a pressure resistant pipe 30. In this case, a shape of the pipe 30 is not particularly limited, but it is preferably a spiral shape in view of downsizing of a device.

The reaction section 13 is provided with an inlet 13a for introducing the raw materials dissolved or melted in the contact section 9, and an inlet 13b, as one example of a catalyst inlet, for introducing the metal catalyst supplied from the tank 11 by the metering pump 12. In the present embodiment, each inlet (13a, 13b) is composed of a connector for connecting a tubular member, such as a part of a cylinder or pipe 30 for passing therein the raw materials through to the reaction section 13, with pipes for supplying the raw materials or compressive fluid. The connector is not particularly limited, and is selected from those known in the art, such as reducers, couplings, Y, T, and outlets. Note that, the reaction section 13 may be provided with a gas outlet for releasing evaporated materials. Moreover, the reaction section 13 contains a heater 13c for heating the transported raw materials.

FIG. 3 illustrates an embodiment where one reaction section 13 is used, but the polymerization reaction device 100 may contain two or more reaction sections 13. In the case where a plurality of reaction sections 13 are contained, the reaction (polymerization) conditions per reaction section 13, i.e., conditions, such as the temperature, concentration of the catalyst, the pressure, the average retention time, and stirring speed, can be the same as in the case only one reaction section 13 is used, but they are preferably optimized per reaction section 13 corresponding to the progress of the polymerization (the stage of the polymerization). Note that, it is not very good idea that excessively large number of reaction sections 13 are connected to give many stages, as it may extend a reaction time, or a device may become complicated. The number of stages is preferably 1 to 4, more preferably 1 to 3.

In the case where polymerization is performed with only one reaction section, a polymerization degree of an obtained polymer or an amount of monomer residues in the polymer are generally unstable, and tend to be varied, and therefore it is not suitable in industrial productions. It is thought that the instability thereof is caused because raw materials having the melt viscosity of a few poises to several tens poises and the polymerized polymer having the melt viscosity of approximately 1,000 poises are present together. In the present embodiment, compared to the above, the viscosity difference in the reaction section 13 (also referred to as a polymerization system) can be reduced, as the raw materials and polymer product are melted (liquidized). Therefore, a polymer can be stably produced even when the number of stages is reduced compared to that in the conventional polymerization reaction device.

The metering pump 14 discharges the polymer product P polymerized in the reaction section 13 from a discharge nozzle 15, which is one example of a polymer outlet, to the outside of the reaction section 13. Alternatively, the polymer product P may be discharged from the reaction section 13 by utilizing a pressure difference between the inside and outside of the reaction section 13, without using the metering pump 14. In this case, instead of the metering pump 14, a pressure adjustment valve 16 may be used, as illustrated in FIG. 4, so as to adjust an internal pressure of the reaction section 13 or a discharging amount of the polymer product P.

<<<Batch-Type Polymerization Reaction Device>>>

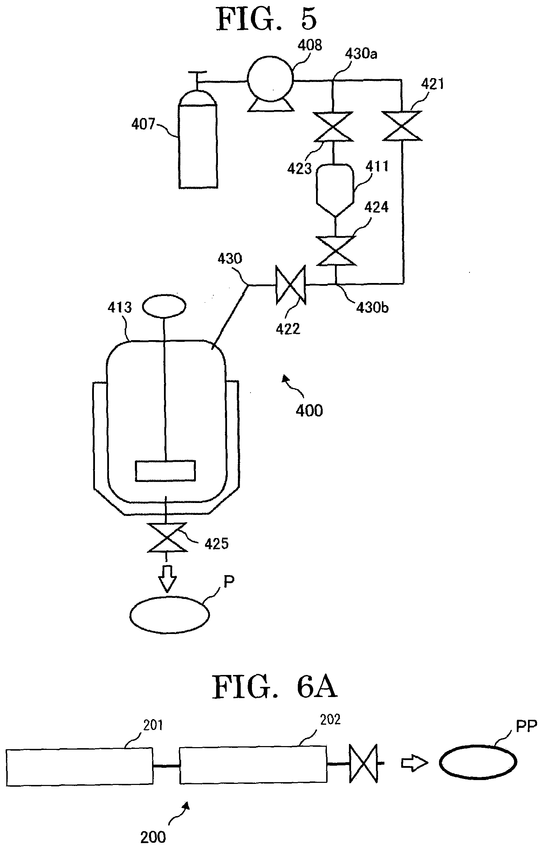

Next, a batch-type polymerization reaction device 400 illustrated in FIG. 5 will be explained. In the system diagram of FIG. 5, the polymerization reaction device 400 contains: a tank 407, a metering pump 408, an addition pot 411, a reaction vessel 413 and valves (421, 422, 423, 424, 425). The above devices are connected with each other via a pressure resistant pipe 430 as depicted in FIG. 5. The pipe 430 is provided with connectors (430a, 430b).

The tank 407 stores the compressive fluid. Note that, the tank 407 may store a gas or solid that becomes a compressive fluid by application of heat or pressure in the path through which it is supplied to the reaction vessel 413, or in the reaction vessel 413. In this case, the gas or solid stored in the tank 407 may be formed in the state of (1), (2), or (3) depicted in the phase diagram of FIG. 2, within the reaction vessel 413 upon application of heat or pressure.

The metering pump 408 supplies the compressive fluid stored in the tank 407 to the reaction vessel 413 with constant pressure and flow rate. The addition pot 411 stores the metal catalyst to be added to the raw materials in the reaction vessel 413. By opening and closing each of the valves (421, 422, 423, 424), the path is switched between a path for supplying the compressive fluid stored in the tank 407 to the reaction vessel 413 via the addition pot 411, and a path for supplying the compressive fluid to the reaction vessel 413 without passing through the addition pot 411.

The reaction vessel 413 has been charged with the ring-opening polymerizable monomer and the initiator in advance. The reaction vessel 413 is a pressure resistant vessel configured to bring the previously charged ring-opening polymerizable monomer and initiator into contact with the compressive fluid supplied from the tank 407 and the metal catalyst supplied from the addition pot 411, to thereby carry out ring-opening polymerization of the ring-opening polymerizable monomer. Note that, the reaction vessel 413 may be provided with a gas outlet for releasing evaporated materials. Moreover, the reaction vessel 413 contains a heater for heating the raw materials and the compressive fluid. Further, the reaction vessel 413 contains a stirring device for stirring the raw materials and the compressive fluid. The stirring device prevents sedimentation of generated polymer by stirring when there is a difference in concentration between the raw materials and the polymer product. Therefore, the polymerization reaction can be carried out more uniformly and quantitatively. The valve 425 discharges the compressive fluid and the polymer product (polymer) in the reaction vessel 413 by opening after the completion of the polymerization reaction.

<<Polymerization Method>>

Next, a polymerization method of a ring-opening polymerizable monomer using the polymerization reaction device 100 or the polymerization reaction device 400 will be explained.

<<<Continuous-Type Polymerization Method>>>

First, a continuous-type polymerization method of a ring-opening polymerizable monomer using a polymerization reaction device 100 will be explained. In the polymerization reaction device 100, a ring-opening polymerizable monomer and compressive fluid are continuously supplied and brought into contact with each other, and are allowed to carry out ring-opening polymerization of the ring-opening polymerization monomer, to thereby continuously generate a polymer. First, each of the metering feeders (2, 4), the metering pump 6, and the metering pump 8 is operated to continuously supply a ring-opening polymerizable monomer, initiator, additives, and compressive fluid in the tanks (1, 3, 5, 7). As a result, the raw materials and compressive fluid are continuously introduced into the pipe of the contact section 9 from respective inlets (9a, 9b, 9c, 9d). Note that, the weight accuracy of solid (powder or granular) raw materials may be low compared to that of the liquid raw materials. In this case, the solid raw materials may be melted into a liquid to be stored in the tank 5, and then introduced into the tube of the contact section 9 by the metering pump 6. The order for operating the metering feeders (2, 4) and the metering pump 6 and metering pump 8 are not particularly limited, but it is preferred that the metering pump 8 be operated first because there is a possibility that raw materials are solidified if the initial raw materials are sent to the reaction section 13 without being in contact with the compressive fluid.
The speed for feeding each of the raw materials by the respective metering feeder (2, 4) or metering pump 6 is adjusted based on the predetermined mass ratio of the ring-opening polymerizable monomer, initiator, and additives so that the mass ratio is kept constant. A total mass of each of the raw material supplied per unit time by the metering feeder (2, 4) or metering pump 6 (the feeding speed of the raw materials (g/min)) is adjusted based on desirable physical properties of a polymer or a reaction time. Similarly, a mass of the compressive fluid supplied per unit time by the metering pump 8 (the feeding speed of the compressive fluid (g/min)) is adjusted based on desirable physical properties of a polymer or a reaction time. A ratio of the feeding speed of the raw material to the feeding speed of the compressive fluid (so called a feeding ratio), which is expressed by the following formula, is preferably 0.50 or more but less than 1.00, more preferably 0.65 or more but 0.99 or less, and further more preferably 0.80 or more but 0.95 or less.

$$1 \; > \; \frac{\text{Feeding speed of the raw materials (g/min)}}{\text{Feeding speed of the raw materials (g/min) +}\atop\text{Feeding speed of the compressive fluid (g/min)}} \; \geq \; 0.5$$

When the feeding ratio is less than 0.5, an amount of the compressive fluid for use increases and thus not economical, and moreover as the density of the ring-opening polymerizable monomer becomes low, polymerization speed may be slow down. Also, when the feeding ratio is less than 0.5, the mass of the compressive fluid is greater than the mass of the raw materials, and therefore a melted phase of the melted ring-opening polymerizable monomer and a fluid phase in which the ring-opening polymerizable monomer is melted with the compressive fluid are co-existed, which may make uniform proceeding of the reaction difficult.
By setting the feeding ratio to 0.5 or greater, a reaction progresses with the high concentration of the raw materials and a polymer product (i.e., high solid content) when the raw materials and the compressive fluid are sent to the reaction section 13. The solid content in the polymerization system here is largely different from a solid content in a polymerization system where polymerization is performed by dissolving a small amount of a ring-opening polymerizable monomer in a significantly large amount of a compressive fluid in accordance with a conventional production method. The production method of the present embodiment is characterized by that a polymerization reaction progresses efficiently and stably in a polymerization system having a high solid content. Note that, when the feeding ratio is greater than 0.99, there is a possibility that the compressive fluid may not sufficiently dissolve the ring-opening polymerizable monomer therein, and the intended reaction does not uniformly progress.

Since the raw materials and the compressive fluid are each continuously introduced into the tube of the contact section 9, they are continuously brought into contact with each other. As a result, each of the raw materials, such as the ring-opening polymerizable monomer, the initiator, and the additives, are dissolved or melted in the contact section 9. In the case where the contact section 9 contains a stirring device, the raw materials and compressive fluid may be stirred. In order to prevent the introduced compressive fluid from turning into gas, the internal temperature and pressure of the tube of the reaction section 13 are controlled to the temperature and pressure both equal to or higher than at least a triple point of the compressive fluid. The control of the temperature and pressure here is performed by adjusting the output of the heater 9e of the contact section 9, or adjusting the feeding amount of the compressive fluid. In the present embodiment, the temperature for melting the ring-opening polymerizable monomer may be the temperature equal to or lower than the melting point of the ring-opening polymerizable monomer under atmospheric pressure. It is assumed that the internal pressure of the contact section 9 becomes high under the influence of the compressive fluid so that the melting point of the ring-opening polymerizable monomer reduces the melting point thereof under the atmospheric pressure. Accordingly, the ring-opening polymerizable monomer is melted in the contact section 9, even when an amount of the compressive fluid is small with respect to the ring-opening polymerizable monomer.

In order to melt each of the raw materials efficiently, the timing for applying heat to or stirring the raw materials and compressive fluid in the contact section 9 may be adjusted. In this case, heating or stirring may be performed after bringing the raw materials and the compressive fluid into contact with each other, or heating or stirring may be performed while bringing the raw materials and the compressive fluid into contact with each other. To ensure melting of the materials, for example, the ring-opening polymerizable monomer and the compressive fluid may be brought into contact with each other after heating the ring-opening polymerizable monomer at the temperature equal to or higher than the melting point thereof. In the case where the contact section 9 is composed of a biaxial mixing device, for example, each of the aforementioned aspects may be realized by appropriately setting an alignment of screws, arrangement of inlets (9a, 9b, 9c, 9d), and temperature of the heater 9e.

In the present embodiment, the additives are supplied to the contact section 9 separately from the ring-opening polymerizable monomer, but the additives may be supplied together with ring-opening polymerizable monomer. Alternatively, the additives may be supplied after completion of a polymerization reaction. In this case, after taking the obtained polymer product out from the reaction section 13, the additive may be added to the polymer product while kneading the mixture of the additives and polymer product.

The raw materials dissolved or melted in the contact section 9 are each sent by the liquid transfer pump 10, and supplied to the reaction section 13 through the inlet 13a. Meanwhile, the metal catalyst in the tank 11 is measured, a predetermined amount of which is supplied by the metering pump 12 to the reaction section 13 through the inlet 13b. The metal catalyst can function even at room temperature, and therefore, in the present embodiment, the metal catalyst is added after melting the raw materials in the compressive fluid. In the conventional art, the timing for adding the metal catalyst has not been discussed in association with the ring-opening polymerization of the ring-opening polymerizable monomer using the compressive fluid. In the present embodiment, in the course of the ring-opening polymerization, the metal catalyst is added to the polymerization system in the reaction section 13 because of the high activity of the organic catalyst, where the polymerization system contains a mixture of raw materials such as the ring-opening polymerizable monomer and the initiator, sufficiently dissolved or melted in the compressive fluid. When the metal catalyst is added in the state where the mixture is not sufficiently dissolved or melted, a reaction may unevenly progress.

The raw materials each sent by the liquid transfer pump 10 and the metal catalyst supplied by the metering pump 12 are sufficiently stirred by a stirring device of the reaction section 13, or heated by a heater 13c to the predetermined temperature when transported. As a result, ring-opening polymerization reaction of the ring-opening polymerizable monomer is carried out in the reaction section 13 in the presence of the metal catalyst (polymerization step).

The lower limit of a temperature during ring-opening polymerization of the ring-opening polymerizable monomer (polymerization reaction temperature) is not particularly limited, but it is 40°C, preferably 50°C, and even more preferably 60°C. When the polymerization reaction temperature is lower than 40°C, it may take a long time to melt the ring-opening polymerizable monomer in the compressive fluid, depending on the type of the ring-opening polymerizable monomer, or melting of the ring-opening polymerizable monomer may be insufficient, or the activity of the metal catalyst may be low. As a result, the reaction speed may be reduced during the polymerization, and therefore it may not be able to proceed to the polymerization reaction quantitatively.

The upper limit of the polymerization reaction temperature is not particularly limited, but it is either 150°C, or a temperature that is higher than the melting point of the ring-opening polymerizable monomer by 50°C, whichever higher. The upper limit of the polymerization reaction temperature is preferably 100°C, or a temperature that is higher than the melting point of the ring-opening polymerizable monomer by 30°C, whichever higher. The upper limit of the polymerization reaction temperature is more preferably 90°C, or the melting point of the ring-opening polymerizable monomer, whichever higher. The upper limit of the polymerization reaction temperature is even more preferably 80°C, or temperature that is lower than the melting point of the ring-opening polymerizable monomer by 20°C, whichever higher. When the polymerization reaction temperature is higher than the aforementioned temperature, which is higher than the melting point of the ring-opening polymerizable monomer by 30°C, a depolymerization reaction, which is a reverse reaction of ring-opening polymerization, tends to be caused equilibrately, and therefore the polymerization reaction is difficult to proceed quantitatively. In the case where a ring-opening monomer having low melting point, such as a ring opening polymerizable monomer that is liquid at room temperature, is used, the polymerization reaction temperature may be temperature that is higher than the melting point by 30°C to enhance the activity of the metal catalyst. In this case, however, the polymerization reaction temperature is preferably 100°C or lower. Note that, the polymerization reaction temperature is controlled by a heater 13c equipped with the reaction section 13, or by externally heating the reaction section 13. When the polymerization reaction temperature is measured, a polymer product obtained by the polymerization reaction may be used for the measurement.

In a conventional production method of a polymer using supercritical carbon dioxide, polymerization of a ring-opening polymerizable monomer is carried out using a large amount of supercritical carbon dioxide as supercritical carbon dioxide has low ability of dissolving a polymer. In accordance with the polymerization method of the present embodiment, ring-opening polymerization of a ring-opening polymerizable monomer is performed with a high concentration, which has not been realized in a conventional art, in the course of production of a polymer using a compressive fluid. In the present embodiment, the internal pressure of the reaction section 13 becomes high under the influence of the compressive fluid, and thus glass transition temperature (Tg) of a polymer product becomes low. As a result, the produced polymer product has low viscosity, and therefore a ring-opening reaction uniformly progresses even in the state where the concentration of the polymer product is high.

In the present embodiment, the polymerization reaction time (the average retention time in the reaction section 13) is appropriately set depending on the polymerization reaction temperature and a target molecular weight of a polymer product to be produced. The polymerization reaction time is not particularly limited so long as the monomers are consumed and the reaction is completed. In the present embodiment, the polymerization reaction time may be 20 minutes or shorter. This polymerization reaction time is short, which has not been realized before in polymerization of a ring-opening polymerizable monomer in a compressive fluid.

The pressure for the polymerization, i.e., the pressure of the compressive fluid, may be the pressure at which the compressive fluid supplied by the tank 7 becomes a liquid gas ((2) in the phase diagram of FIG. 2), or high pressure gas ((3) in the phase diagram of FIG. 2), but it is preferably the pressure at which the compressive fluid becomes a supercritical fluid ((1) in the phase diagram of FIG. 2). By making the compressive fluid into the state of a supercritical fluid, melting of the ring-opening polymerizable monomer is accelerated to uniformly and quantitatively progress a polymerization reaction. In the case where carbon dioxide is used as the compressive fluid, the pressure is 3.7 MPa or higher, preferably 5 MPa or higher, more preferably 7.4 MPa or higher, which is the critical pressure or higher, in view of efficiency of a reaction and polymerization rate. In the case where carbon dioxide is used as the compressive fluid, moreover, the temperature thereof is preferably 25°C or higher from the same reasons to the above.

The moisture content in the reaction section 13 is preferably 4 mol% or less, more preferably 1 mol% or less, and even more preferably 0.5 mol% or less, relative to 100 mol% of the ring-opening polymerizable monomer. When the moisture content is greater than 4 mol%, it may be difficult to control a molecular weight of a resulting product as the moisture itself acts as an initiator. In order to control the moisture content in the polymerization system, an operation for removing moistures contained in the ring-opening polymerizable monomer and other raw materials may be optionally provided as a pretreatment.

The polymer product P completed the ring-opening polymerization reaction in the reaction section 13 is discharged outside the reaction section 13 by means of the metering pump 14. The speed for discharging the polymer product P by the metering pump 14 is preferably constant so as to keep the internal pressure of the polymerization system filled with the compressive fluid constant, and to yield a uniform polymer product. To this end, the liquid sending system inside the reaction section 13 and the amount for sending the liquid by the liquid transfer pump 10 are controlled to maintain the back pressure of the metering pump 14 constant. Similarly, the liquid sending system inside the contact section 9, and the feeding speeds of the metering feeders (2, 4) and metering pumps (6, 8) are controlled to maintain the back pressure of the liquid transfer pump 10 constant. The control system may be an ON-OFF control system, i.e., an intermittent feeding system, but it is in most cases preferably a continuous or stepwise control system where the rational speed of the pump or the like is gradually increased or decreased. Any of these controls realizes to stably provide a uniform polymer product.

The metal catalyst remained in a polymer product obtained by the present embodiment is removed, if necessary. A method for removing is not particularly limited, but examples thereof include: vacuum distillation in case of a compound having a boiling point; a method for extracting and removing the metal catalyst using a compound dissolving the metal catalyst as an entrainer; and a method for absorbing the catalyst with a column to remove the metal catalyst. In method for removing the metal catalyst, a system thereof may a batch system where the polymer product is taken out from the reaction section and then the metal catalyst is removed therefrom, or a continuous processing system where the metal catalyst is removed in the reaction section 13 without taking the polymer product out of the reaction section 13. In the case of vacuum distillation, the vacuum condition is set based on a boiling point of the metal catalyst. For example, the temperature in the vacuum is 100°C to 120°C, and the metal catalyst can be removed at the temperature lower than the temperature at which the polymer product is depolymerized. If a solvent is used in the process of extraction, it may be necessary to provide a step for removing the solvent after extracting the metal catalyst. Therefore, it is preferred that a compressive fluid be used as a solvent for the extraction. As for the process of such extraction, conventional techniques used for extracting perfumes may be diverted.

<<Batch-Type Polymerization Method>>

Next, a batch-type polymerization method of a ring-opening polymerizable monomer using the polymerization reaction device 400 will be explained. In the polymerization reaction device 400, the raw materials containing the ring-opening polymerizable monomer and the compressive fluid are brought into contact with each other at a predetermined mixing ratio to thereby carry out ring-opening polymerization of the ring-opening polymerizable monomer in the presence of the metal catalyst. In this case, first, the metering pump 408 is operated and the valves (421, 422) are open to thereby supply the compressive fluid stored in the tank 407 to the reaction vessel 413 without going through the addition pot 411. As a result, the previously charged ring-opening polymerizable monomer and initiator are brought into contact with the compressive fluid supplied from the tank 407 in the reaction vessel 413, and the mixture is stirred by the stirring device so that the raw materials, such as the ring-opening polymerizable monomer, are melted. In the polymerization step, preferably, the bringing the compressive fluid and the raw materials containing the ring-opening polymerizable monomer into contact with each other makes the ring-opening polymerizable monomer melt. When ring-opening polymerization is performed with melting the ring-opening polymerizable monomer, the reaction progresses with the high ratio of the raw materials, and therefore the efficiency of the reaction improves.

In this case, a ratio (mixing ratio) of the raw materials to the compressive fluid in the reaction vessel 413 is within the ratio represented by the following formula (i).

$$1 > \frac{\text{Mass of the raw materials}}{\text{Mass of the raw materials} + \text{Mass of the compressive fluid}} \geq 0.5$$

<div align="right">Formula (i)</div>

In the present embodiment, the raw materials in the formula above contain the ring-opening polymerizable monomer and the initiator. The mixing ratio is appropriately selected depending on the intended purpose without any limitation, provided that it is 0.5 or more but less than 1. The mixing ratio is preferably 0.65 to 0.99, more preferably 0.80 to 0.95. When the mixing ratio is less than 0.5, an amount of the compressive fluid for use increases and thus not economical, and moreover as the density of the ring-opening polymerizable monomer becomes low, polymerization speed may be slow down. When the mixing ratio is less than 0.5, moreover, the mass of the compressive fluid is greater than the mass of the raw materials, and therefore a melted phase of the melted ring-opening polymerizable monomer and a fluid phase in which the ring-opening polymerizable monomer is melted with the compressive fluid are co-existed, which may make uniform proceeding of the reaction difficult.

The temperature and pressure at which the ring-opening polymerizable monomer is melted in the reaction vessel 413 is controlled to the temperature and pressure at least equal to or higher than the triplet point of the compressive fluid to thereby prevent the fed compressive fluid from transforming into gas. This is controlled by adjusting output of a heater of the reaction vessel 413 or a degree of opening or closure of the valves (421, 422). In the present embodiment, the temperature at which the ring-opening polymerizable monomer is melted may be temperature equal to or lower than the melting point of the ring-opening polymerizable monomer under atmospheric pressure. The internal pressure of the reaction vessel 413 becomes high in the presence of the compressive fluid, and thus the melting point of the ring-opening polymerizable monomer becomes low. As a result, the ring-opening polymerizable monomer melts in the reaction vessel 413 even the state where the amount of the compressive fluid is small and the value of the mixing ratio is large.

Moreover, the timing for applying heat to or starting stirring each of the raw materials and the compressive fluid in the reaction vessel 413 may be adjusted so as to sufficiently melt each of the raw materials. In this case, heat or stirring may be applied or started after or during each of the raw materials is brought into contact with the compressive fluid. Moreover, the ring-opening polymerizable monomer and the compressive fluid may be brought into contact with each other after heat having temperature equal to or higher than the melting point of the ring-opening polymerizable monomer is applied to the ring-opening polymerizable monomer to melt in advance.

Subsequently, the valves (423, 424) are open to thereby supply the metal catalyst stored in the addition pot 411 to the reaction vessel 413. The metal catalyst supplied to the reaction vessel 413 is optionally sufficiently stirred by the stirring device of the reaction vessel 413, and is heated to the predetermined temperature by the heater. As a result, the ring-opening polymerizable monomer is proceeded to ring-opening polymerization in the presence of the metal catalyst in the reaction vessel 413, to thereby generate a polymer.

As for a range of temperature during ring-opening polymerization of the ring-opening polymerizable monomer (polymerization reaction temperature), the lower limit is preferably temperature lower than a melting point of the ring-opening polymerizable monomer by 50°C, more preferably temperature lower than the above melting point by 40°C. The upper limit is preferably temperature higher than the melting point of the ring-opening polymerizable monomer by 50°C, more preferably temperature higher than the above melting point by 40°C. When the polymerization reaction temperature is lower than the temperature lower than the melting point of the ring-opening polymerizable monomer by 50°C, the reaction speed may be low during the polymerization, by which the polymerization reaction may not be able to progress quantitatively. When the polymerization reaction temperature is higher than the temperature higher than the melting point of the ring-opening polymerizable monomer by 50°C, a depolymerization reaction, which is a reverse reaction of ring-opening polymerization, tends to occur equilibrately, by which the polymerization reaction may not be progressed quantitatively. Note that, the ring-opening polymerizable monomer may be subjected to ring-opening polymerization at temperature outside the aforementioned range, depending on a combination of the compressive fluid, ring-opening polymerizable monomer, and metal catalyst. In the case where a ring-opening monomer having low melting point, such as a ring opening polymerizable monomer that is liquid at room temperature, is used, the polymerization reaction temperature may be temperature that is higher than the upper limit of the above range to enhance the activity of the catalyst. In this case, however, the polymerization reaction temperature is preferably 150°C or lower, more preferably 100°C or lower.

In a conventional production method of a polymer using supercritical carbon dioxide, polymerization of a ring-opening polymerizable monomer is carried out using a large amount of supercritical carbon dioxide as supercritical carbon dioxide has low ability of dissolving a polymer. In accordance with the polymerization method of the present embodiment, ring-opening polymerization of a ring-opening polymerizable monomer is performed with a high concentration, which has not been realized in a conventional art, in the course of production of a polymer using a compressive fluid. In the present embodiment, the internal pressure of the reaction vessel 413 becomes high under the influence of the compressive fluid, and thus glass transition temperature (Tg) of a polymer product becomes low. As a result, the produced polymer product has low viscosity, and therefore a ring-opening reaction uniformly progresses even in the state where the concentration of the polymer is high.

In the present embodiment, the polymerization reaction time is appropriately set depending on a target molecular weight of a polymer product to be produced. When a target weight average molecular weight is 3,000 to 100,000, the polymerization reaction time is 2 hours to 24 hours.

The pressure for the polymerization, i.e., the pressure of the compressive fluid, may be the pressure at which the compressive fluid supplied by the tank 407 becomes a liquid gas ((2) in the phase diagram of FIG. 2), or high pressure gas ((3) in the phase diagram of FIG. 2), but it is preferably the pressure at which the compressive fluid becomes a supercritical fluid ((1) in the phase diagram of FIG. 2). By making the compressive fluid into the state of a supercritical fluid, melting of the ring-opening polymerizable monomer is accelerated to uniformly and quantitatively progress a polymerization reaction. In the case where carbon dioxide is used as the compressive fluid, the pressure is 3.7 MPa or higher, preferably 5 MPa or higher, more preferably 7.4 MPa or higher, which is the critical pressure or higher, in view of efficiency of a reaction and polymerization rate. In the case where carbon dioxide is used as the compressive fluid, moreover, the temperature thereof is preferably 25°C or higher from the same reasons to the above.

The moisture content in the reaction vessel 413 is preferably 4 mol% or less, more preferably 1 mol% or less, and even more preferably 0.5 mol% or less, relative to 100 mol% of the ring-opening polymerizable monomer. When the moisture content is greater than 4 mol%, it may be difficult to control a molecular weight of a resulting product as the moisture itself acts as an initiator. In order to control the moisture content in the polymerization reaction system, an operation for removing moistures contained in the ring-opening polymerizable monomer and other raw materials may be optionally provided as a pretreatment.

To the polymer obtained through polymerization of the ring-opening polymerizable monomer, a urethane bond or ether bond can be introduced. Similarly to the ring-opening polymerizable monomer, the urethane bond or ether bond can be introduced by carrying out a polyaddition reaction in a compressive fluid with addition of an isocyanate compound or glycidyl compound. In this case, a preferable method thereof for controlling a resulting molecular structure is a method in which the aforementioned compound is separately added after completion of a polymerization reaction of the ring-opening polymerizable monomer.

The isocyanate compound used in the polyaddition reaction is not particularly limited, and examples thereof include a polyfunctional isocyanate compound, such as isophorone diisocyanate, hexamethylene diisocyanate, lysine diisocyanate, xylene diisocyanate, tolylene diisocyanate, diphenylmethane diisocyanate, and cyclohexane diisocyanate. The glycidyl compound is not particularly limited, and examples thereof include a polyfunctional glycidyl compound, such as diethylene glycol diglycidyl ether, polyethylene glycol diglycidyl ether, neopentyl glycol diglycidyl ether, 1,6-hexanediol diglycidyl ether, and diglycidyl terephthalate.

The polymer product P completed the ring-opening polymerization reaction in the reaction vessel 413 is discharged from the valve 425 to sent outside of the reaction vessel 413.

In the production method of the present embodiment, the polymerization rate of the ring-opening polymerizable monomer through ring-opening polymerization is 97 mol% or higher, preferably 98 mol% or higher, in both the continuous-type step and the batch-type step. When the polymerization rate is less than 97 mol%, the polymer product does not have satisfactory thermal characteristics to function as a polymer product, and moreover it may be necessary to separately provide an operation for removing a ring-opening polymerizable monomer. Note that, in the present embodiment, the polymerization rate is a ratio of the ring opening polymerizable monomer contributed to generation of a polymer, relative to the ring-opening polymerizable monomer of the raw materials. The amount of the ring-opening polymerizable monomer contributed to generation of a polymer can be obtained by deducting the amount of the unreacted ring-opening polymerizable monomer (ring-opening polymerizable monomer residues) from the amount of the generated polymer.

(Polymer Product)

A polymer product of the present embodiment is a polymer product which is obtained by the method for producing a polymer of the present invention, is substantially free from an organic solvent, containing ring-opening polymerizable monomer residues in an amount of 3 mol% or less, and has a weight average molecular weight of 100,000 or higher.

The polymer product preferably contains a carbonyl bond such as an ester bond and a carbonate bond.

The amount of the ring-opening polymerizable monomer residues in the polymer product obtained by the method for producing a polymer of the present embodiment is preferably 3 mol% or less, more preferably 0.5 mol% or less, further preferably 0.1 mol% or less. Note that, the amount of the ring-opening polymerizable monomer residues in the present embodiment can be expressed as a molar fraction; i.e., [amount by mole of the ring-opening polymerizable monomer residues / (amount by mole of the ring-opening polymerizable monomer residues + amount by mole of the ring-opening polymerizable monomer in the polymer product)].

The amount of the ring-opening polymerizable monomer residues is determined by calculating a ratio of a peak area attributed to the ring-opening polymerizable monomer residues to a peak area attributed to the polymer product obtained from measurement results of nuclear magnetic resonance of the polymer product. When the amount of the ring-opening polymerizable monomer residue is greater than 3 mol%, heat resistant stability of a resulting polymer product becomes poor due to impaired thermal characteristics thereof, and moreover the decomposition of the polymer tends to progress as carboxylic acid generated by ring-opening of the monomer residue functions as a catalyst for accelerating hydrolysis decomposition.

The weight average molecular weight of the polymer product obtained in the present embodiment can be adjusted by adjusting an amount of the initiator. The weight average molecular weight thereof is not particularly limited and can be adjusted depending on the intended use, but it is generally 12,000 to 200,000, preferably 100,000 to 200,000. Note that, in the present embodiment, the weight average molecular weight is calculated based on a measurement of gel permeation chromatography (GPC). When the weight average molecular weight thereof is greater than 200,000, productivity is low because of the increased viscosity, which is not economically advantageous. When the weight average molecular weight thereof is smaller than 12,000, it may not be preferable because a polymer product may have insufficient strength to function as a polymer. The value (Mw/Mn) obtained by dividing the weight average molecular weight Mw of the polymer product obtained by the present embodiment with the number average molecular weight Mn thereof is preferably in the range of 1.0 to 2.5, more preferably 1.0 to 2.0. When the value thereof is greater than 2.0, it is not preferable as the polymerization reaction may have progressed non-uniformly to produce a polymer product, and therefore it is difficult to control physical properties of the polymer.

The polymer product obtained by the method for producing a polymer of the present embodiment is substantially free from an organic solvent, as it is produced by the method without using the organic solvent, and has an extremely small amount of the ring-opening polymerizable monomer residues, which is 3 mol% or less. Therefore, the polymer product obtained by the production method of the present embodiment is excellent in safety and stability. In the present embodiment, the organic solvent means a solvent of an organic matter used for a ring-opening polymerization, and dissolves a polymer product obtained through a ring-opening polymerization reaction. In the case where a polymer obtained through a ring-opening polymerization reaction is polylactic acid (L-form 100%), examples of the organic solvent include: a halogen solvent, such as chloroform, and methylene chloride; and tetrahydrofuran. The fact "substantially free from an organic solvent" means that the amount of the organic solvent in the polymer product is the detection limit or smaller as measured by the following method.

[Measuring Method of Residual Organic Solvent]

To 1 part by mass of a polymer product that is a subject of a measurement, 2 parts by mass of 2-propanol is added, and the resulting mixture is dispersed for 30 minutes by applying ultrasonic waves, followed by storing the resultant over 1 day or longer in a refrigerator (5°C) to thereby extract the organic solvent in the polymer product. A supernatant liquid thus obtained is analyzed by gas chromatography (GC-14A, SHIMADZU) to determine quantities of organic solvent and monomer residues in the polymer product, to thereby measure a concentration of the organic solvent. The measuring conditions for the analysis are as follows:

Device: SHIMADZU GC-14A
Column: CBP20-M 50-0.25
Detector: FID
Injection amount: 1 $\mu$L to 5 $\mu$L
Carrier gas: He, 2.5 kg/cm$^2$
Flow rate of hydrogen: 0.6 kg/cm$^2$
Flow rate of air: 0.5 kg/cm$^2$
Chart speed: 5 mm/min
Sensitivity: Range 101 $\times$ Atten 20
Temperature of column: 40°C
Injection temperature: 150°C

<<Use of Polymer Produc>>

The polymer product obtained by the method for producing a polymer of the present embodiment is excellent in safety and stability because it is produced by the method which does not use an organic solvent, and there are hardly any monomer residues therein. Accordingly, the polymer obtained by the production method of the present embodiment is widely applied for various uses, such as an electrophotographic developer, a printing ink, paints for building, cosmetic products, and medical materials.

<<Effects of Present Embodiment>>

In a conventional melt polymerization method of a ring-opening polymerizable monomer, a reaction is generally performed at high temperature, i.e., 150°C or higher, and therefore unreacted monomer residues remain in a resulting polymer product. Therefore, in some cases, it is necessary to provide a step for removing the unreacted monomers. Moreover, a solution polymerization is performed using a solvent, it is necessary to provide a step for removing the solvent in order to use a resulting polymer as a solid. Accordingly, any of these conventional methods cannot avoid increased cost due to increase in the number of steps in the production, or decrease in yield.

In accordance with the method for producing a polymer of the present embodiment, it is possible to provide a polymer having excellent mold formability and thermal stability at low cost, with low environmental load, energy saving, and resource saving for the following reasons.

(1) A reaction proceeds at low temperature compared to a melt polymerization method in which a reaction is preceded by heating at temperature higher than the melting point of the obtained polymer.
(2) As the reaction proceeds at low temperature, a side reaction hardly occurs, and thus a polymer can be obtained at high yield relative to an amount of the ring-opening polymerizable monomer added (namely, an amount of unreacted ring-opening polymerizable monomer is small). Accordingly, a purification step for removing unreacted ring-opening polymerizable monomer, which is performed for attaining a polymer having excellent mold formability and thermal stability, can be simplified, or omitted.
(3) In a polymerization method using an organic solvent, it is necessary to provide a step for removing a solvent to thereby yield a polymer product as a solid. In addition, it is still difficult to completely remove the organic solvent even by the step for removing the solvent. In the polymerization method of the present embodiment, a drying step is simplified or omitted, because a waste liquid is not generated, and a dry polymer product can be obtained with one stage, as a compressive fluid is used.
(4) It is possible to attain both desirable polymerization speed and polymerization efficiency (a ratio of a polymer product relative to the polymerization system) by controlling a supplying amount of the compressive fluid.
(5) A uniform proceeding of a reaction can be achieved, because ring-opening polymerization is carried out by adding a catalyst after melting the ring-opening polymerizable monomer with the compressive fluid.

[Second Embodiment] (Applied Example)

Subsequently, a second embodiment, which is an applied example of the first embodiment, will be explained.

In the production method of the first embodiment, a reaction progresses quantitatively with hardly any ring-opening polymerizable monomer residue. Accordingly, a first method of the second embodiment uses the polymer product produced by the production method of the first embodiment, and synthesizes a complex by appropriately setting timing for adding one or more additional ring-opening polymerizable monomers. Moreover, a second method of the second embodiment uses two or more polymer products including a polymer product produced by the production method of the first embodiment, and forms a complex by continuously mixing the two or more polymer products in the presence of a compressive fluid. Note that, in the present embodiment, the term "complex" means a copolymer having two or more polymer segments obtained by polymerizing monomers with a plurality of systems, or a mixture of two or more polymers obtained by polymerizing monomers with a plurality of systems. Two synthesis methods of a stereo complex are described as examples of the complex, hereinafter. Note that, the term "stereo complex" means a polymer (e.g., polylactic acid) which contains a pair of components which are opitical isomers (e.g., a poly-D-lactic acid component and a poly-L-lactic acid component), and has a stereo complex crystal, where the degree of the crystalinity of stereo complex (S) represented by the following formula (i) is 90% or higher.

$$(S) = [\triangle Hmsc/(\triangle Hmh + \triangle Hmsc)] \times 100 \qquad (i)$$

In formula (i), $\triangle$Hmh is heat of melting a homocrystal and is observed at temperature lower than 190°C in the case of polylactic acid, and $\triangle$Hmsc is heat of melting a stereo complex crystal and is observed at temperature of 190°C or higher in the case of polylactic acid.

<First Method>

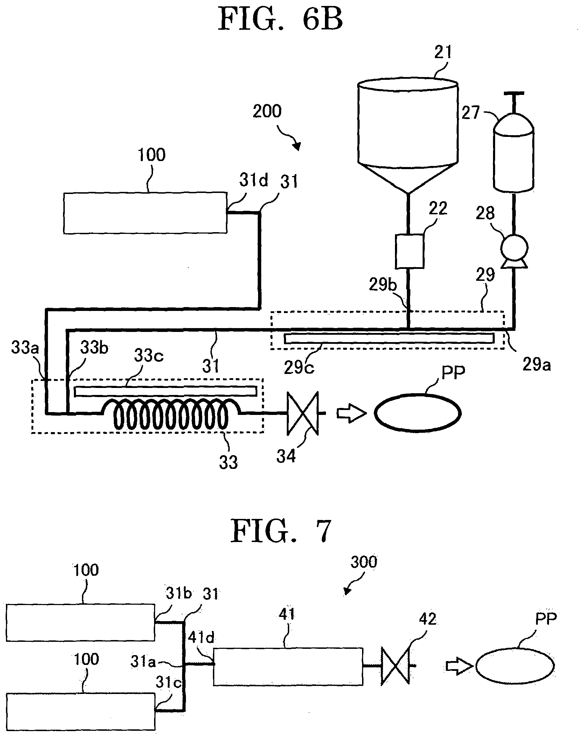

First, the first method will be explained with reference to FIGs. 6A and 6B. FIGs. 6A and 6B are each a schematic diagram illustrating a complex production system for use in the first method. The first method contains a second polymerization step of continuously bringing the first polymer, which has been obtained by ring-opening polymerization of the first ring-opening monomer in the above-described polymerization step (first polymerization step) in the first embodiment, and the second ring-opening monomer into contact with each other, to thereby allow the first polymer and the second ring-opening monomer to carry out polymerization. Specifically, a polymer is produced in System 1 (reference 201 in the diagram) in the complex production system 200 of FIG. 6A in accordance with the production method of the first embodiment, to thereby obtain a polymer product P. The polymer product P and a newly introduced second ring-opening polymerizable monomer are brought into contact with each other in System 2 (reference 202 in the diagram) in the presence of the compressive fluid, and continuously polymerized to thereby produce a complex product PP (a final polymer product). Note that, a complex product PP having three or more segments may be obtained by tandemly repeating a system similar to System 2 in the complex production system 200 of FIG. 6A.
Subsequently, specific example of a complex production system 200 will be explained with reference to FIG. 6B. The complex production system 200 contains a polymerization reaction device 100, which is similar to the one used in the first embodiment, tanks (21, 27), a metering feeder 22, a metering pump 28, a contact section 29, a reaction section 33, and a pressure adjustment valve 34.
In the complex production system 200, the reaction section 33 is composed of a tube or tubular device having a polymer inlet 33a at one end, and a complex outlet at the other end, where the polymer inlet 33a is configured to introduce a plurality of polymers, and the discharge outlet is configured to discharge a complex obtained by mixing the polymers. The polymer inlet 33a of the reaction section 33 is connected with an outlet of the polymerization reaction device 100 via the pressure resistant pipe 31. The outlet of the polymerization reaction device 100 means an outlet of a pipe 30 or edge of a cylinder of the reaction section 13, metering pump 14 (see FIG. 3), or pressure adjustment valve 16 (see FIG. 4). In any case, the polymer product P generated in each of the polymerization reaction devices 100 can be supplied to the reaction section 33 in the dissolved or melted state without turning back to the atmospheric pressure.
The tank 21 stores a second ring-opening polymerizable monomer. Note that, in the first method, the second ring-opening polymerizable monomer is an optical isomer of the ring-opening polymerizable monomer stored in the tank 1. The tank 27 stores a compressive fluid. The compressive fluid stored in the tank 27 is not particularly limited, but it is preferably the same to the compressive fluid stored in the tank 7 to proceed to a polymerization reaction uniformly. Note that, the tank 27 may store a gas or solid that is formed into a compressive fluid by applying heat or pressure during when it is supplied to the contact section 29, or in the contact section 29. In this case, the gas or solid stored in the tank 27 may become in the state of (1), (2), or (3) in the phase diagram of FIG. 2 in the contact section 29 upon application of heat or pressure.
The metering feeder 22 measures the second ring-opening polymerizable monomer stored in the tank 21, and continuously supplies the second ring-opening polymerizable monomer to the contact section 29. The metering pump 28 continuously supplies the compressive fluid stored in the tank 27 to the contact section 29 with constant pressure and flow rate.

The contact section 29 is composed of a pressure resistant device or tube for continuously bringing the second ring-opening polymerizable monomer supplied from the tank 21 into contact with the compressive fluid supplied from the tank 27, and dissolving or melting the raw materials therein. The container of the contact section 29 is provided with an inlet 29a for introducing the compressive fluid supplied from the tank 27 by the metering pump 28, and an inlet 29b for introducing the second ring-opening polymerizable monomer supplied from the tank 21 by the metering feeder 22. Moreover, the contact section 29 is provided with a heater 29c for heating the supplied second ring-opening polymerizable monomer and compressive fluid. Note that, in the present embodiment, a device or tube similar to the contact section 9 is used as the contact section 29.

The reaction section 33 is composed of a pressure resistant device or tube for polymerizing a polymer product P, which is produced through polymerization performed in the polymerization reaction device 100 and is an intermediate product in the state being dissolved or melted, with the second ring-opening polymerizable monomer dissolved or melted in the contact section 29. The reaction section 33 is provided with an inlet 33a for introducing the polymer product P, which is the dissolved or melted intermediate product, into the tube, and an inlet 33b for introducing the dissolved melted second ring-opening polymerizable monomer into the tube. Moreover, the reaction section 33 is provided with a heater 33c for heating the transported polymer product P and second ring-opening polymerizable monomer. Note that, in the present embodiment, the one similar to the reaction section 13 is used as the reaction section 33. The pressure adjustment valve 34, as one example of the complex outlet, sends the complex product PP polymerized in the reaction section 33 out of the reaction section 33 by utilizing a difference between internal pressure and external pressure of the reaction section 33.

In the first method, the ring-opening polymerizable monomer (e.g., L-lactide) is polymerized in the reaction section 13, and after completing the reaction quantitatively, an optical isomer (e.g., D-lactide) of the ring-opening polymerizable monomer, which is one example of the second ring-opening polymerizable monomer, is added to the reaction section 33 to further carry out a polymerization reaction. As a result, a stereo block copolymer is obtained. This method is effective because recemization hardly occurs, because the reaction is carried out at the temperature equal to or lower than the melting point of the ring-opening polymerizable monomer with the state where there are fewer ring-opening polymerizable monomer residues, and because a complex is produced by a reaction of one stage.

<Second Method>

Subsequently, the second method will be explained with reference to FIG. 7. FIG. 7 is a schematic diagram illustrating a complex production system for use in the second method. The second method further contains a mixing step of continuously mixing two or more polymers containing the polymer obtained in the above-described polymerization step in the first embodiment in the presence of the compressive fluid. This method produces a complex product PP. The two or more polymer products are, for example, polymers obtained by polymerizing ring-opening polymerizable monomers which are optically isomeric to each other. It is preferred that the two or more polymers contain a first polymer obtained by ring-opening polymerization of a first ring-opening polymerizable monomer, and a second polymer obtained by ring-opening polymerization of a second ring-opening polymerizable monomer, and the first ring-opening polymerizable monomer and the second ring-opening polymerizable monomer be optical isomers to each other.

The complex production system 300 contains a plurality of polymerization reaction devices 100, a mixing device 41, and a pressure adjustment valve 42.

In the complex production system 300, the polymer inlet 41a of the mixing device 41 is connected to an outlet (31b, 31c) of each polymerization reaction device 100 via the pressure resistant pipe 31. The outlet of the polymerization reaction device 100 means an outlet of an edge of the pipe 30 or cylinder of the reaction section 13, an outlet of the metering pump 14 (FIG. 3), or an outlet of the pressure adjustment valve 16 (FIG. 4). In any case, the polymer product P generated in each polymerization reaction device 100 can be supplied to the reaction section 33 in the melted state without turning back to the atmospheric pressure. As a result, it is possible to mix two or more polymer products P at lower temperature in the mixing device 41, as the polymer products P have low viscosity under the influence of the compressive fluid. Note that, FIG. 7 illustrates an example where two polymerization reaction devices 100 are provided parallel by providing one connector 31a to the pipe 31, but three or more polymerization reaction devices 100 may be provided parallel by providing a plurality of connectors.

The mixing device 41 is not particularly limited, provided that it is capable of mixing a plurality of polymer products supplied from the polymerization reaction devices 100, and examples thereof include a stirring device. As for the stirring device, a single screw stirring device, a twin-screw stirring device where screws are engaged with each other, a biaxial mixer containing a plurality of stirring elements which are engaged or overlapped with each other, a kneader containing spiral stirring elements which are engaged with each other, or a stick mixer is preferably used. The temperature (mixing temperature) for mixing the polymer products in the mixing device 41 can be set in the same manner as in setting the polymerization reaction temperature in the reaction section 13 of each polymerization reaction device 100. Note that, the mixing device 41 may separately contain a system for supplying a compressive fluid to the polymer products to be mixed. The pressure adjustment valve 42, as one example of the complex outlet, is a device for adjusting a flow rate of the complex product PP obtained by mixing the polymer products in the mixing device 41.

In the second method, an L-form monomer and D-form monomer (e.g., lactide) are each separately polymerized in a compressive fluid in a polymerization reaction device 100. The polymer products obtained by polymerization are mixed in the compressive fluid to thereby obtain a stereo complex (a mixing step). Generally, a polymer such as polylactic acid tends to be decomposed as re-heated to the temperature equal to or higher than the melting point, even when the polymer has fewer ring-opening polymerizable monomer residues. The second method is effective because, similarly to the first method, racemization or thermal deterioration can be inhibited by mixing low viscous polylactic acids melted in the compressive fluid.

In the first method and the second method, methods for producing a stereo complex by separately polymerizing ring-opening polymerizable monomers which are optically isomeric to each other are explained. However, ring-opening polymerizable monomers for use in the present embodiment are not necessarily optically isomeric to each other. Moreover, by combining the first method and the second method, block copolymers for forming a stereo complex can be mixed.

Examples

The present embodiment will be more specifically explained through Examples and Comparative Examples, but Examples shall not be construed as to limit the scope of the present invention in any way. Note that, molecular weights and polylmerizarion rates of polymer products obtained in Examples and Comparative Examples were determined in the following manners. In each Example, a polymer is produced without using an organic solvent and thus the obtained polymer product contains no organic solvent.

<Measurement of Molecular Weight of Polymer Product>

The molecular weight was measured through gel permeation chromatography (GPC) under the following conditions.

Apparatus: GPC-8020 (product of TOSOH CORPORATION)
Column: TSK G2000HXL and G4000HXL (product of TOSOH CORPORATION)
Temperature: 40°C
Solvent: Tetrahydrofuran (THF)
Flow rate: 1.0 mL/min

First, a calibration curve of molecular weight was obtained using monodispersed polystyrene serving as a standard sample. A polymer sample (1 mL) having a polymer concentration of 0.5% by mass was applied and measured under the above conditions, to thereby obtain the molecular weight distribution of the polymer. The number average molecular weight Mn and the weight average molecular weight Mw of the polymer were calculated from the calibration curve. The molecular weight distribution is a value calculated by dividing Mw with Mn.

<Polymerization Rate of Monomer (mol%)>

Nuclear magnetic resonance (NMR) spectroscopy of polylactic acid of the polymer product or complex was performed in deuterated chloroform by means of a nuclear magnetic resonance apparatus (JNM-AL300, of JEOL Ltd.). In this case, a ratio of a quartet peak area attributed to lactide (4.98 ppm to 5.05 ppm) to a quartet peak area attributed to polylactic acid (5.10 ppm to 5.20 ppm) was calculated, and an amount of the unreacted monomer (mol%) (an amount of ring-opening polymerizable monomer residues) was determined by multiplying the obtained value from the calculation with 100. The polymerization rate is the value obtained by deducting the calculated amount of the unreacted monomer from 100.

<Continuous Productivity>

After continuously operating the polymerization reaction device 100 for 8 hours or longer, the pipe of the contact section 9 of the polymerization reaction device 100 was decomposed, and whether or not there was any deposition of a gelation product or the like in the pipe was visually observed. As a result of the visual evaluation, the case where there was no deposition of the gelation production was judged as "A," and the case where there were depositions of the gelation product was judged as "B."

[Example 1]

Ring-opening polymerization of a mixture (mass ratio: 90/10, manufacturer: Purac, melting point: 100°C) of L-lactide and D-lactide was performed by means of the polymerization reaction device 400 of FIG. 5. The configuration of the polymerization reaction device 400 was as follows.
Tank 407: Carbonic acid gas cylinder

Addition pot 411:

A 1/4-inch SUS316 pipe was sandwiched with valves 423, 424, and the resultant was used as an addition pot.
The addition pot was charged with 4 mg of tin di(2-ethylhexanoate) (also called "tin 2-ethylhexanoate," CAS: 301-10-0) in advance.

Reaction vessel 413:

A 100 mL SUS316 pressure resistant vessel
This pressure resistant vessel was charged with 108 g of a mixture (a molar ratio 100/3) of (a) fluid lactide (a mixture (mass ratio: 90/10) of L-lactide and D-lactide) as the ring-opening polymerizable monomer, and (b) lauryl alcohol as the initiator, in advance.
The metering pump 408 was operated and the valves (421, 422) were open to thereby supply carbon dioxide stored in the tank 407 to the reaction vessel 413 without going through the addition pot 411. After replacing the atmosphere of the reaction vessel 413 with carbon dioxide, the reaction vessel 413 was charged with carbon dioxide until the internal pressure of the reaction vessel 413 reached 15 MPa. After heating the internal temperature of the reaction vessel 413 to 110°C, the valves (423, 424) were open to supply tin di(2-ethylhexanoate) stored in the addition pot 411 to the reaction vessel 413. Thereafter, lactide was allowed to proceed to a polymerization reaction for 12 hours in the reaction vessel 413. After completing the reaction, the valve 425 was open, and the internal temperature and pressure of the reaction vessel 413 were gradually returned to room temperature and ambient pressure. Three hours later, a polymer product (polylactic acid) in the reaction vessel 413 was taken out. The physical properties (Mn, Mw/Mn, polymerization rate) of the polymer product were measured by the aforementioned methods. The results are depicted in Table 1. Note that, the mixing ratio in Table 1 was calculated by the following formula.

$$\text{Spatial volume of supercritical carbon dioxide: } 100 \text{ mL} - 108 \text{ g}/1.27$$

$$\text{(specific gravity of raw materials)} = 15 \text{ mL}$$

$$\text{Mass of supercritical carbon dioxide: } 15 \text{ mL} \times 0.303 \text{ (specific gravity of}$$

$$\text{carbon dioxide at } 110^{\circ}\text{C, } 15 \text{ MPa}) = 4.5$$

$$\text{Mixing ratio: } 108 \text{ g}/(108 \text{ g} + 4.5 \text{ g}) = 0.96$$

[Examples 2 to 4]

Polymer products of Examples 2 to 4 were produced in the same manner as in Example 1, provided the amount of the initiator for use was changed to those as depicted in the columns thereof for Examples 2 to 4 of Table 1. Physical properties of the obtained polymer products were measured by the aforementioned manners. The results are presented in Table 1.

[Examples 5 to 7]

Polymer products of Examples 5 to 7 were produced in the same manner as in Example 1, provided that the mixing ratio and the reaction temperature were respectively changed to those as depicted in the columns thereof for Examples 5 to 7 of Table 1. Physical properties of the obtained polymer products were measured by the aforementioned manners. The results are presented in Table 1.

[Examples 8 to 10]

Polymer products of Examples 8 to 10 were produced in the same manner as in Example 1, provided that the mixing ratio, the amount of the initiator, and the reaction pressure were respectively changed to those as depicted in the columns for Examples 8 to 10 of Table 2. Physical properties of the obtained polymer products were measured by the aforementioned manners. The results are presented in Table 2.

[Examples 11 to 14, and Comparative Example 1]

Polymer products of Examples 11 to 14 and Comparative Example 1 were produced in the same manner as in Example 1, provided that an amount of the raw materials added to the reaction vessel 413 was changed to 90 g (Example 11), 70 g (Example 12), 50 g (Example 13), 30 g (Example 14), and 10 g (Comparative Example 1) and that the reaction time was changed as depicted in the columns for Examples 11 to 14 of Table 2 and Comparative Example 1 of Table 3. Physical properties of the obtained polymer products were measured by the aforementioned manners. The results are presented in Tables 2 and 3.

[Examples 15 to 20]

Polymer products of Examples 15 to 20 were produced in the same manner as in Example 1, provided that the reaction temperature and the reaction time were respectively changed to those as depicted in the columns for Examples 15 to 20 of Table 3. Physical properties of the obtained polymer products were measured by the aforementioned manners. The results are presented in Table 3.

Table 1

|  | Ex. 1 | Ex. 2 | Ex. 3 | Ex. 4 | Ex. 5 | Ex. 6 | Ex. 7 |
|---|---|---|---|---|---|---|---|
| Mixing ratio | 0.96 | 0.96 | 0.96 | 0.96 | 0.91 | 0.94 | 0.97 |
| Initiator amount (per 100 mol of monomer) | 3.00 | 1.00 | 0.50 | 0.25 | 1.00 | 1.00 | 1.00 |
| Pressure (MPa) | 15 | 15 | 15 | 15 | 15 | 15 | 15 |
| Temp. (°C) | 110 | 110 | 110 | 110 | 60 | 80 | 130 |
| Reaction time (hr) | 12 | 12 | 12 | 12 | 12 | 12 | 12 |
| Weight avg. molecular weight (Mw) | 11,000 | 23,000 | 48,000 | 104,000 | 22,000 | 21,000 | 25,000 |
| Number avg. molecular weight (Mn) | 5,300 | 12,000 | 24,000 | 58,000 | 11,000 | 10,000 | 12,000 |
| Molecular weight distribution (Mw/Mn) | 2.1 | 1.9 | 2.0 | 1.8 | 2.0 | 2.1 | 2.1 |
| Polymerization rate (mol%) | 100 | 100 | 99 | 99 | 88 | 95 | 99 |

Table 2

|  | Ex. 8 | Ex. 9 | Ex. 10 | Ex. 11 | Ex. 12 | Ex. 13 | Ex. 14 |
|---|---|---|---|---|---|---|---|
| Mixing ratio | 0.98 | 0.94 | 0.92 | 0.91 | 0.84 | 0.73 | 0.51 |
| Initiator amount (per 100 mol of monomer) | 1.00 | 1.00 | 1.00 | 1.00 | 1.00 | 1.00 | 1.00 |
| Pressure (MPa) | 10 | 20 | 30 | 15 | 15 | 15 | 15 |
| Temp. (°C) | 110 | 110 | 110 | 110 | 110 | 110 | 110 |
| Reaction time (hr) | 12 | 12 | 12 | 24 | 24 | 24 | 24 |
| Weight avg. molecular weight (Mw) | 19,000 | 20,000 | 23,000 | 20,000 | 24,000 | 21,000 | 18,000 |
| Number avg. molecular weight (Mn) | 9,800 | 9,500 | 11,000 | 11,000 | 12,000 | 11,000 | 9,000 |
| Molecular weight distribution (Mw/Mn) | 1.9 | 2.1 | 2.1 | 1.8 | 2.0 | 1.9 | 2.0 |
| Polymerization rate (mol%) | 99 | 100 | 100 | 99 | 97 | 95 | 88 |

Table 3

| | Ex. 15 | Ex. 16 | Ex. 17 | Ex. 18 | Ex. 19 | Ex. 20 | Comp. Ex. 1 |
|---|---|---|---|---|---|---|---|
| Mixing ratio | 0.97 | 0.97 | 0.97 | 0.97 | 0.97 | 0.97 | 0.26 |
| Initiator amount (per 100 mol of monomer) | 1.00 | 1.00 | 1.00 | 1.00 | 1.00 | 1.00 | 1.00 |
| Pressure (MPa) | 15 | 15 | 15 | 15 | 15 | 15 | 15 |
| Temp. (°C) | 130 | 130 | 130 | 150 | 150 | 150 | 110 |
| Reaction time (hr) | 2 | 4 | 8 | 0.5 | 1 | 2 | 12 |
| Weight avg. molecular weight (Mw) | 24,000 | 25,000 | 21,000 | 273,000 | 243,000 | 276,000 | 14,000 |
| Number avg. molecular weight (Mn) | 11,000 | 12,000 | 11,000 | 130,000 | 135,000 | 138,000 | 11,000 |
| Molecular weight distribution (Mw/Mn) | 2.2 | 2.1 | 1.9 | 2.1 | 1.8 | 2.0 | 1.3 |
| Polymerization rate (mol%) | 99 | 97 | 98 | 97 | 99 | 99 | 28 |

[Example 2-1]

Ring-opening polymerization of a mixture (mass ratio: 90/10) of L-lactide and D-lactide was performed by means of the polymerization reaction device 100 of FIG. 4. The configuration of the polymerization reaction device 100 was as follows.

Tank 1, Metering Feeder 2:

Plunger pump NP-S462, manufactured by Nihon Seimitsu Kagaku Co., Ltd.
The tank 1 was charged with melted lactide as a ring-opening polymerizable monomer (a mixture of L-lactide and D-lactide (mass ratio: 90/10, manufacturer: Purac, melting point: 100°C).

Tank 3, Metering Feeder 4:

Intelligent HPLC pump (PU-2080), manufactured by JASCO Corporation
The tank 3 was charged with lauryl alcohol as an initiator.

Tank 5, Metering Pump 6: Not used in Example 2-1
Tank 7: Carbonic acid gas cylinder
Tank 11, Metering Pump12:
Intelligent HPLC pump (PU-2080), manufactured by JASCO Corporation

The tank 11 was charged with tin di(2-ethylhexanoate).

Contact Section 9: 1/8-inch pressure resistant pipes without stirring functions
Reaction Section 13: 1/8-inch pressure resistant pipes without stirring functions

The metering feeder 2 constantly supplied lactide in the melted state stored in the tank 1 into a pipe of the contact section 9 at the flow rate of 4 g/min. The metering feeder 4 constantly supplied lauryl alcohol in the tank 3 into the pipe of the contact section 9 so that the amount of the lauryl alcohol was to be 0.5 mol relative to 99.5 mol of lactide. The metering pump 8 continuously supplied the carbonic acid gas in the tank 7 into the pipe of the contact section 9 so that the amount of the carbonic acid gas was to be 5 parts by mass relative to 95 parts by mass of the raw materials supplied per unit time. Accordingly, the feeding ratio was set as follows:
Feeding ratio = feeding speed of the raw materials (g/min)/[feeding speed of the raw materials (g/min) + feeding speed of the compressive fluid (g/min)] = 95/100 = 0.95. Here, the raw materials represent lactide serving as a ring-opening polymerizable monomer, and lauryl alcohol serving as an initiator. Note that, the feeding speed of the raw materials was 4.26 g/min. Further, the opening of the pressure adjustment valve 16 was adjusted so that the internal pressure of the polymerization system was to be 15 MPa. Moreover, the set temperature adjacent to the inlet 9a for raw materials of the contact section 9 was set to 150°C, and the set temperature adjacent to the outlet for the melt and mixed raw materials was set to 150°C. In the manner as mentioned above, the contact section 9 continuously brought the raw materials including lactide and lauryl alcohol, and the compressive fluid, all of which had been supplied from the tanks (1, 3, 7), into contact with each other, mixed together, and melted.

Each raw material melted in the contact section 9 was sent to the reaction section 13 by means of the liquid transfer pump 10. By introducing tin di(2-ethylhexanoate) (manufactured by Wako Pure Chemical Industries, Ltd.) stored in the tank 11 by means of the metering pump 12 into the reaction section 13 so that the amount of the polymerization catalyst was to be 0.1 mol relative to 99.9 mol of lactide, ring-opening polymerization of lactide was performed in the presence of tin di(2-ethylhexanoate). In this case, the preset temperature adjacent to the inlet 13a of the reaction section 13 was set to 150°C, the preset temperature of the edge part thereof was set to 150°C, and the average retention time of each raw material in the reaction section 13 was set to about 2 hours. Physical properties (Mn, Mw/Mn, and polymerization rate) of the polymer product (polylactic acid) obtained through the pressure adjustment valve 16 and continuous productivity were measured in the manners described above. The results are presented in Table 4. Note that, in Table 4, tin di(2-ethylhexanoate) is abbreviated as "tin."

[Examples 2-2 and 2-3]

Polymer products (polylactic acid) of Examples 2-2 and 2-3 were produced in the same manner as in Example 2-1, provided that the feeding ratio was changed to those as depicted in the columns for Examples 2-2 and 2-3 of Table 4. Physical properties (Mn, Mw/Mn, and polymerization rate) of the obtained polymer products and continuous productivity were measured in the manners described above. The results are presented in Table 4.

[Examples 2-4 and 2-5]

Polymer products (polylactic acid) of Examples 2-4 and 2-5 were produced in the same manner as in Example 2-1, provided that the amount of the initiator was changed to those as depicted in the columns for Examples 2-4 and 2-5 of Table 4. Physical properties (Mn, Mw/Mn, and polymerization rate) of the obtained polymer products and continuous productivity were measured in the manners described above. The results are presented in Table 4.

[Examples 2-6 and 2-7]

Polymer products (polylactic acid) of Examples 2-6 and 2-7 were produced in the same manner as in Example 2-1, provided that the temperature of the cylinder was changed to those as depicted in the columns for Examples 2-6 and 2-7 of Table 4. Physical properties (Mn, Mw/Mn, and polymerization rate) of the obtained polymer products and continuous productivity were measured in the manners described above. The results are presented in Table 4.

[Examples 2-8 and 2-9]

Polymer products (polylactic acid) of Examples 2-8 and 2-9 were produced in the same manner as in Example 2-1, provided that the internal pressure of the polymerization system was changed to those as depicted in the columns for Examples 2-8 and 2-9 of Table 4. Physical properties (Mn, Mw/Mn, and polymerization rate) of the obtained polymer products and continuous productivity were measured in the manners described above. The results are presented in Table 4.

Table 4

| | | Ex. 2-1 | Ex. 2-2 | Ex. 2-3 | Ex. 2-4 | Ex. 2-5 | Ex. 2-6 | Ex. 2-7 | Ex. 2-8 | Ex. 2-9 |
|---|---|---|---|---|---|---|---|---|---|---|
| Monomer | | Lactide | Lactide | Lactide | Lactide | Lactide | Lactide | Lactide | Lactide | Lactide |
| Amount (mol%) of initiator | | 1 | 1 | 1 | 0.5 | 0.1 | 1 | 1 | 1 | 1 |
| Catalyst | | tin | tin | tin | tin | tin | tin | tin | tin | tin |
| Temp. of cylinder | Raw material supplying part (°C) | 150 | 150 | 150 | 150 | 150 | 120 | 180 | 150 | 150 |
| | Edge part (°C) | 150 | 150 | 150 | 150 | 150 | 120 | 180 | 150 | 150 |
| Internal pressure of cylinder (MPa) | | 15 | 15 | 15 | 15 | 15 | 15 | 10 | 10 | 30 |
| Feeding ratio | | 0.95 | 0.75 | 0.55 | 0.95 | 0.95 | 0.95 | 0.95 | 0.95 | 0.95 |
| Average retention time (hr) | | 2 | 2 | 2 | 2 | 2 | 2 | 2 | 2 | 2 |
| Weight average molecular weight (Mw) | | 30,000 | 28,000 | 27,000 | 58,000 | 270,000 | 31,000 | 29,000 | 29,000 | 30,000 |
| Molecular weight distribution (Mw/Mn) | | 2.1 | 1.8 | 1.9 | 1.9 | 2.0 | 1.8 | 1.9 | 1.9 | 2.1 |
| Polymerization rate (mol%) | | 99 | 100 | 99 | 98 | 99 | 99 | 99 | 99 | 99 |
| Continuous running properties | | A | A | A | A | A | A | A | A | A |

[Examples 2-10]

A complex was produced by means of a complex production system 300 illustrated in FIG. 7. Among a plurality of polymerization reaction devices 100 in the complex production system 300, one polymerization reaction device is referred to as the polymerization reaction device 100 of System 1, and the other polymerization reaction device is referred to as the polymerization reaction device 100 of System 2, hereinafter. The configuration of the complex production system 300 is as follows. polymerization reaction device 100 (System 1, 2): the same polymerization reaction device as the one used in Example 2-1 mixing device 41: biaxial stirring device equipped with screws that were engaged with each other

    inside diameter of cylinder: 40 mm
    biaxial rotation with identical directions
    rotational speed: 30 rpm

L-lactide (manufacturer: Purac, melting point: 100°C) was polymerized in the polymerization reaction device 100 of System 1 in the same manner as in Example 2-1, provided that the monomer for use and the monomer feeding speed were changed as depicted in Table 5. Note that, the monomer feeding speed is a feeding speed when the monomer is supplied from the tank 1 to the contact section 9. Concurrently, D-lactide (manufacturer: Purac, melting point: 100°C) was polymerized in the polymerization reaction device 100 in System 2 in the same manner as in Example 2-1, provided that the monomer for use and the monomer feeding speed were changed as depicted in Table 5. Each of the polymer products (poly-L-lactide, poly-D-lactide) obtained in the respective polymerization reaction device 100 in the melted state was directly and continuously supplied to the mixing device 41 by each metering pump 14, in the presence of the pressure of a compressive fluid. A complex (polylactic acid forming a stereo complex) was formed by continuously mixing the polymer products by the mixing device 41 under the conditions as depicted in Table 5. Physical properties (Mn, Mw/Mn, polymerization rate) of the obtained complexes were measured in the methods described above. The results are presented in Table 5. Note that, in Table 5, tin di(2-ethylhexanoate) is abbreviated as "tin."

[Examples 2-11 and 2-12]

Polymer products of Examples 2-11 and 2-12 were produced in the same manner as in Example 2-10, provided the amount of the initiator for use was changed to those as depicted in the columns thereof for Examples 2-11 and 2-12 of Table 5. Physical properties of the obtained polymer products were measured by the aforementioned manners. The results are presented in Table 5.

Table 5

| | | Ex. 2-10 | | Ex. 2-11 | | Ex. 2-12 | |
|---|---|---|---|---|---|---|---|
| | | System 1 | System 2 | System 1 | System 2 | System 1 | System 2 |
| Monomer | | L-lactide | D-lactide | L-lactide | D-lactide | L-lactide | D-lactide |
| Amount of initiator (mol%) | | 1 | 1 | 0.5 | 0.5 | 0.1 | 0.1 |
| Catalyst | | tin | tin | tin | tin | tin | tin |
| Monomer feeding speed (g/min) | | 4 | 4 | 4 | 4 | 4 | 4 |
| Feeding ratio | | 0.95 | 0.95 | 0.95 | 0.95 | 0.95 | 0.95 |
| Polymerization step | Internal temp. of cylinder: Raw material supplying part (°C) | 150 | 150 | 150 | 150 | 150 | 150 |
| | Edge part (°C) | 150 | 150 | 150 | 150 | 150 | 150 |
| | Internal pressure of cylinder (MPa) | 15 | 15 | 15 | 15 | 15 | 15 |
| | Average retention time (hr) | 2 | 2 | 2 | 2 | 2 | 2 |
| Mixing step | Internal temp. of cylinder: Raw material supplying part (°C) | 150 | | 150 | | 150 | |
| | Edge part (°C) | 150 | | 150 | | 150 | |
| | Internal pressure of cylinder (MPa) | 15 | | 15 | | 15 | |
| | Average retention time (hr) | 0.5 | | 0.5 | | 0.5 | |
| Weight average molecular weight (Mw) | | 28,000 | | 59,000 | | 270,000 | |
| Molecular weight distribution (Mw/Mn) | | 1.9 | | 2.1 | | 2.0 | |
| Polymerization rate (mol%) | | 99 | | 99 | | 99 | |
| Continuous running properties | | A | | A | | A | |

[Example 2-13]

A complex was produced by means of a complex production system 200 of FIG. 6. The device of FIG. 6 has a configuration where two polymerization reaction devices 100 of FIG. 3 are connected tandemly as the polymerization device of System 1 and the polymerization device of System 2. The configuration of the complex production system 200 is as follows.

Tank 1, Metering Feeder 2:

plunger pump NP-S462, manufactured by Nihon Seimitsu Kagaku Co., Ltd.
tank 1 was charged with a 99/1 (molar ratio) mixture of
L-lactide (manufacturer: Purac, melting point: 100°C) in the melted state as a ring-opening polymerizable monomer (first monomer), and
lauryl alcohol as an initiator.

Tank 3, Metering feeder 4: Not used in Example 2-13
Tank 5, Metering pump 6: Not used in Example 2-13
Tank 7: carbonic acid gas cylinder
Tank 27: carbonic acid gas cylinder
Tank 21, Metering feeder 22:

plunger pump NP-S462, manufactured by Nihon Seimitsu Kagaku Co., Ltd.
tank 21 was charged with D-lactide (manufacturer: Purac, melting point: 100°C) in the melted state as a ring-opening polymerizable monomer (second monomer).

Tank 11, Metering pump 12:

intelligent HPLC pump (PU-2080), manufactured by JASCO Corporation
tank 11 was charged with tin di(2-ethylhexanoate).

Contact section 9: biaxial stirring device equipped with screws engaged with each other

inside diameter of cylinder: 30 mm
biaxial rotation with identical directions
rotational speed: 30 rpm

Contact section 29: biaxial stirring device equipped with screws engaged with each other

Inside diameter of cylinder: 30 mm
biaxial rotation with identical directions
Rotational speed: 30 rpm

Reaction section 13: two-axial kneader

Inside diameter of cylinder: 40 mm
Biaxial rotation with identical directions
Rotational speed: 60 rpm

Reaction section 33: two-axial kneader

inside diameter of cylinder: 40 mm
biaxial rotation with identical directions
rotational speed: 60 rpm

The metering feeder 2 was operated to constantly supply a mixture of L-lactide and lauryl alcohol in the tank 1 to the vessel of the biaxial stirring device of the contact section 9 at the flow rate of 4 g/min (feeding speed of the raw material). The metering pump 8 was operated to continuously supply carbonic acid gas in the tank 7 to the vessel of the biaxial stirring device of the contact section 9 so that the amount of the carbonic acid gas was 5 parts by mass relative to 95 parts by mass of the supplied amount of the raw materials (L-lactide and lauryl alcohol). Specifically, the feeding ratio was set as follows:
Feeding ratio = feeding speed of the raw materials (g/min)/[feeding speed of the raw materials (g/min) + feeding speed of the compressive fluid (g/min)] = 95/100 = 0.95. In the manner as mentioned, the raw materials including L-lactide and lauryl alcohol, and the compressive fluid were continuously brought into contact with each other and the raw materials were melted in the biaxial stirring device.
The raw materials melted in the biaxial stirring device were sent to the two-axial kneader of the reaction section 13 by means of the liquid transfer pump 10. Meanwhile, the metering pump 12 was operated to supply the polymerization catalyst (tin di(2-ethylhexanoate)) stored in the tank 11 to the two-axial kneader so that the amount of the polymerization catalyst was 99:1 in the molar ratio relative to the supplied amount of L-lactide. In the manner as mentioned, ring-opening polymerization of L-lactide was performed in the two-axial kneader in the presence of tin di(2-ethylhexanoate).

Further, the metering feeder 22 was operated to constantly supply D-lactide, which was a second ring-opening polymerizable monomer, stored in the tank 21 to the vessel of the biaxial stirring device of the contact section 29 at the 4 g/min (feeding speed of the raw material). Moreover, the metering pump 28 was operated to continuously supply carbonic acid gas in the tank 27 to the vessel of the biaxial stirring device of contact section 29 so that the amount of the carbonic acid gas was 5 parts by mass relative to 95 parts by mass of the supplied amount of D-lactide. In the manner as mentioned above, D-lactide and the compressive fluid were continuously brought into contact with each other and the D-lactide was melted in the biaxial stirring device.

The polymer product (L-polylactic acid), as the intermediate product of the melted state polymerized in reaction section 13, and D-lactide melted in the contact section 29 were both introduced into the two-axial kneader of the reaction vessel 33. In the manner as mentioned, the polymer product (L-polylactic acid) as the intermediate product, and the second ring-opening polymerizable monomer (D-lactide) were polymerized in the two-axial kneader.

Note that, in Example 2-13, the internal pressures of the biaxial stirring device of the contact section 9, and those of the two-axial kneaders of reaction vessels (13, 33) were set to 15 MPa by adjusting the opening and closing degree of the pressure adjustment valve 34. The temperatures of the vessels of the biaxil stirring devices of the melt mixing device (9, 29) were each 150°C at the inlet, and 150°C at the outlet. The temperatures of the two-axial kneaders of the reaction vessels (13, 33) were each 150°C at both the inlet and the outlet. Moreover, the average retention time of each raw material in the biaxial stirring device of the contact section 9, and in the two-axial kneaders of the reaction vessels (13, 33) was set to 1,800 seconds by adjusting the length of the piping system of the biaxial stirring device of each contact section 9, and that of the two-axial kneader of each reaction vessel (13, 33).

The pressure adjustment valve 34 was provided at the edge of the two-axial kneader of the reaction section 33, and a complex (polylactic acids forming a stereo complex) was continuously discharged from the pressure adjustment valve 34. Physical properties (Mn, Mw/Mn, polymerization rate) of the complex of Example 2-13 was measured in the methods described above. The results are presented in Table 6. Note that, in Table 6, tin di(2-ethylhexanoate) is abbreviated as "tin."

[Examples 2-14 and 2-15]

A polymer product of Examples 2-14 was produced in the same manner as in Example 2-10, provided that the amount of the initiator for use was changed to that as depicted in the column for Examples 2-14 of Table 6. A polymer of Example 2-15 was produced in the same manner as in Example 2-10, provided that the first monomer was changed to ε-caprolactone (manufacturer: TOKYO CHEMICAL INDUSTRY CO., LTD.) depicted in the column for Examples 2-15 of Table 6. Physical properties (Mn, Mw/Mn, polymerization rate) of the obtained polymer products (polylactic acid) of Examples 2-14 and 2-15 and continuous productivity were measured by the aforementioned manners. The results are presented in Table 6.

Table 6

| | | Ex. 2-13 | Ex. 2-14 | Ex. 2-15 |
|---|---|---|---|---|
| First monomer | | L-lactide | L-lactide | ε-caprolactone |
| Second monomer | | D-lactide | D-lactide | L-lactide |
| Amount of initiator (mol%) | | 1 | 0.5 | 1 |
| Catalyst | | tin | tin | tin |
| Feeding speed the of raw materials | Metering feeder 2 (g/min) | 4 | 4 | 4 |
| | Metering feeder 22 (g/min) | 4 | 4 | 4 |
| Feeding ratio | Contact section 9 | 0.95 | 0.95 | 0.95 |
| | Contact section 29 | 0.95 | 0.95 | 0.95 |
| Internal pressure (MPa) | | 15 | 15 | 15 |
| Weight average molecular weight (Mw) | | 60,000 | 115,000 | 55,000 |
| Molecular weight distribution (Mw/Mn) | | 1.8 | 2.0 | 2.1 |

(continued)

|  | Ex. 2-13 | Ex. 2-14 | Ex. 2-15 |
|---|---|---|---|
| Polymerization rate (mol%) | 99 | 99 | 99 |

Aspects of the present invention are as follows, for example.

<1> A method for producing a polymer, including:

(i) bringing a compressive fluid and raw materials consisting of a ring-opening polymerizable monomer and an initiator into contact with each other at a mixing ratio represented by the following formula, to thereby allow the ring-opening polymerizable monomer to carry out ring-opening polymerization in the presence of a metal catalyst:

$$1 > \frac{\text{Mass of the raw materials}}{\text{Mass of the raw materials} + \text{Mass of the compressive fluid}} \geq 0.5$$

<2> The method for producing a polymer according to <1>,
wherein the bringing the compressive fluid and the raw materials containing the ring-opening polymerizable monomer into contact with each other makes the ring-opening polymerizable monomer melt.
<3> The method for producing a polymer according to <1> or <2>,
wherein a polymerization rate of the ring-opening polymerizable monomer is 97 mol% or higher.
<4> The method for producing a polymer according to any one of <1> to <3>,
wherein the polymer has a weight average molecular weight of 12,000 or greater.
<5> The method for producing a polymer according to any one of <1> to <4>,
wherein the compressive fluid contains carbon dioxide.
<6> The method for producing a polymer according to any one of <1> to <5>,
wherein the ring-opening polymerizable monomer is a monomer having a ring structure containing an ester bond therein.
<7> The method for producing a polymer according to any one of <1> to <6>,
wherein an upper limit of a temperature during the ring-opening polymerization in the (i) is 100°C.
<8> A method for producing a polymer, including:

(i) continuously supplying and bringing a compressive fluid and raw materials consisting of a ring-opening polymerizable monomer and an initiator into contact with each other under the following conditions, to thereby allow the ring-opening polymerizable monomer to carry out ring-opening polymerization in the presence of a metal catalyst and continuously generate a polymer:

$$1 > \frac{\text{Feeding speed of the raw materials (g/min)}}{\text{Feeding speed of the raw materials (g/min)} + \text{Feeding speed of the compressive fluid (g/min)}} \geq 0.5$$

<9> The method for producing a polymer according to <8>, further including:

(ii) continuously mixing two or more polymers containing the polymer obtained in the (i) in the presence of the compressive fluid.

<10> The method for producing a polymer according to <9>,
wherein the two or more polymers contain a first polymer and a second polymer, where the first polymer is obtained through ring-opening polymerization of a first ring-opening polymerizable monomer, and the second polymer is obtained through ring-opening polymerization of a second ring-opening polymerizable monomer, and
wherein the first ring-opening polymerizable monomer and the second ring-opening polymerizable monomer are optical isomers to each other.
<11> The method for producing a polymer according to claim <8>, further including:

(iii) continuously bringing the polymer obtained through the ring-opening polymerization of the ring-opening polymerizable monomer in the (i) and another ring-opening polymerizable monomer into contact with each other, to thereby allow the polymer and the another ring-opening polymerizable monomer to carry out polymerization.

Reference Signs List

1, 3, 5, 7, 11, 21, 27: tank
2, 4, 22: metering feeder
6, 8, 12, 14, 28: metering pump
9, 29: contact section
9a: inlet (one example of a compressive fluid inlet)
9b: inlet (one example of a monomer inlet)
10: liquid transfer pump
13, 33: reaction section
13a: inlet
13b: inlet (one example of a catalyst inlet)
15: discharge nozzle (one example of a polymer outlet)
16: pressure adjustment valve
30, 31: pipe
33a, 41a: polymer inlet
34: pressure adjustment valve (one example of a complex outlet)
41: mixing device
42: pressure adjustment valve (one example of a complex outlet)
41: mixing device (one example of a device for continuously producing a complex)
100: polymerization reaction device
100a: supply unit
100b: main body of polymerization reaction device (one example of a
device for continuously producing a polymer)
200: complex production system
201: System 1
202: System 2
300: complex production system
407: tank
408: metering pump
411: addition pot
413: reaction vessel
421, 422, 423, 424, 425: valve
P: polymer product
PP: complex product

**Claims**

1. A method for producing a polymer, comprising:

   (i) bringing a compressive fluid and raw materials consisting of a ring-opening polymerizable monomer and an initiator into contact with each other at a mixing ratio represented by the following formula, to thereby allow the ring-opening polymerizable monomer to carry out ring-opening polymerization in the presence of a metal catalyst:

$$1 \; > \; \frac{\text{Mass of the raw materials}}{\text{Mass of the raw materials} + \text{Mass of the compressive fluid}} \; \geq \; 0.5$$

Mass of the raw materials + Mass of the compressive fluid

**2.** The method for producing a polymer according to claim 1,
wherein the bringing the compressive fluid and the raw materials containing the ring-opening polymerizable monomer into contact with each other makes the ring-opening polymerizable monomer melt.

**3.** The method for producing a polymer according to claim 1 or 2,
wherein a polymerization rate of the ring-opening polymerizable monomer is 97 mol% or higher.

**4.** The method for producing a polymer according to any one of claims 1 to 3,
wherein the polymer has a weight average molecular weight of 12,000 or greater calculated based on a measurement of gel permeation chromatography (GPC).

**5.** The method for producing a polymer according to any one of claims 1 to 4,
wherein the compressive fluid contains carbon dioxide.

**6.** The method for producing a polymer according to any one of claims 1 to 5,
wherein the ring-opening polymerizable monomer is a monomer having a ring structure containing an ester bond therein.

**7.** The method for producing a polymer according to any one of claims 1 to 6,
wherein an upper limit of a temperature during the ring-opening polymerization in the (i) is 100°C.

**8.** A method for producing a polymer, comprising:

(i) continuously supplying and bringing a compressive fluid and raw materials consisting of a ring-opening polymerizable monomer and an initiator into contact with each other under the following conditions, to thereby allow the ring-opening polymerizable monomer to carry out ring-opening polymerization in the presence of a metal catalyst and continuously generate a polymer:

$$1 > \frac{\text{Feeding speed of the raw materials (g/min)}}{\text{Feeding speed of the raw materials (g/min) + Feeding speed of the compressive fluid (g/min)}} \geq 0.5$$

**9.** The method for producing a polymer according to claim 8, further comprising:

(ii) continuously mixing two or more polymers containing the polymer obtained in the (i) in the presence of the compressive fluid.

**10.** The method for producing a polymer according to claim 9,
wherein the two or more polymers contain a first polymer and a second polymer, where the first polymer is obtained through ring-opening polymerization of a first ring-opening polymerizable monomer, and the second polymer is obtained through ring-opening polymerization of a second ring-opening polymerizable monomer, and
wherein the first ring-opening polymerizable monomer and the second ring-opening polymerizable monomer are optical isomers to each other.

**11.** The method for producing a polymer according to claim 8, further comprising:

(iii) continuously bringing the polymer obtained through the ring-opening polymerization of the ring-opening polymerizable monomer in the (i) and another ring-opening polymerizable monomer into contact with each other, to thereby allow the polymer and the another ring-opening polymerizable monomer to carry out polymerization.

**Patentansprüche**

**1.** Verfahren zum Herstellen eines Polymers, umfassend:

(i) Inkontaktbringen von einem Druckfluids und Rohstoffen miteinander, die aus einem ringöffnenden polymerisierbaren Monomer und einem Initiator bestehen, in einem Mischungsverhältnis, das durch die folgende Formel dargestellt wird, um dem ringöffnenden polymerisierbaren Monomer dadurch zu ermöglichen, ringöffnende Polymerisation in Gegenwart eines Metallkatalysators auszuführen:

$$1 > \frac{\text{Masse der Rohstoffe}}{\text{Masse der Rohstoffe} + \text{Masse des Druckfluids}} \geq 0{,}5$$

2. Verfahren zum Herstellen eines Polymers nach Anspruch 1,
wobei das Inkontaktbringen des Druckfluids und der Rohstoffe miteinander, die das ringöffnende polymerisierbare Monomer beinhalten, das ringöffnende polymerisierbare Monomer zum Schmelzen bringt.

3. Verfahren zum Herstellen eines Polymers nach Anspruch 1 oder 2,
wobei eine Polymerisationsrate des ringöffnenden polymerisierbaren Monomers bei 97 Mol-% oder höher liegt.

4. Verfahren zum Herstellen eines Polymers nach einem der Ansprüche 1 bis 3,
wobei das Polymer ein Gewichtsmittel des Molekulargewichts von 12.000 oder mehr aufweist, berechnet auf Grundlage einer Messung von Gelpermeationschromatographie (GPC).

5. Verfahren zum Herstellen eines Polymers nach einem der Ansprüche 1 bis 4,
wobei das Druckfluid Kohlenstoffdioxid beinhaltet.

6. Verfahren zum Herstellen eines Polymers nach einem der Ansprüche 1 bis 5,
wobei das ringöffnende polymerisierbare Monomer ein Monomer ist, das eine Ringstruktur aufweist, die darin eine Esterbindung beinhaltet.

7. Verfahren zum Herstellen eines Polymers nach einem der Ansprüche 1 bis 6,
wobei eine Obergrenze einer Temperatur während der ringöffnenden Polymerisation in (i) 100 °C beträgt.

8. Verfahren zum Herstellen eines Polymers, umfassend:

(i) durchgehendes Zuführen und Inkontaktbringen von einem Druckfluid und Rohstoffen miteinander, die aus einem ringöffnenden polymerisierbaren Monomer und einem Initiator bestehen, unter den folgenden Bedingungen, um dem ringöffnenden polymerisierbaren Monomer dadurch zu ermöglichen, ringöffnende Polymerisation in Gegenwart eines Metallkatalysators auszuführen und durchgehend ein Polymer zu erzeugen:

$$1 > \frac{\text{Zuführgeschwindigkeit der Rohstoffe (g/min)}}{\text{Zuführgeschwindigkeit der Rohstoffe (g/min)} + \text{Zuführgeschwindigkeit des Druckfluids (g/min)}} \geq 0{,}5$$

9. Verfahren zum Herstellen eines Polymers nach Anspruch 8, das ferner Folgendes umfasst:

(ii) durchgehendes Mischen von zwei oder mehreren Polymeren, die das Polymer beinhalten, das in (i) in Gegenwart des Druckfluids erhalten wurde.

10. Verfahren zum Herstellen eines Polymers nach Anspruch 9,
wobei die zwei oder die mehreren Polymere ein erstes Polymer und ein zweites Polymer beinhalten, wobei das erste Polymer durch ringöffnende Polymerisation eines ersten ringöffnenden polymerisierbaren Monomers erhalten wird und das zweite Polymer durch ringöffnende Polymerisation eines zweiten ringöffnenden polymerisierbaren Monomers erhalten wird und
wobei das erste ringöffnende polymerisierbare Monomer und das zweite ringöffnende polymerisierbare Monomer optische Isomere zueinander sind.

11. Verfahren zum Herstellen eines Polymers nach Anspruch 8, das ferner Folgendes umfasst:

(iii) durchgehendes Inkontaktbringen des Polymers, das durch die ringöffnende Polymerisation des ringöffnenden polymerisierbaren Monomers in (i) erhalten wurde, und eines anderen ringöffnenden polymerisierbaren Monomers miteinander, um dadurch dem Polymer und dem anderen ringöffnenden polymerisierbaren Monomer zu ermöglichen, eine Polymerisation auszuführen.

**Revendications**

1. Procédé de production d'un polymère, comprenant :

   (i) la mise en contact d'un fluide de compression et de matières premières constituées d'un monomère polymérisable à ouverture de cycle et d'un amorceur selon un rapport de mélange représenté par la formule suivante, pour ainsi permettre au monomère polymérisable à ouverture de cycle d'effectuer une polymérisation à ouverture de cycle en présence d'un catalyseur de métal.

$$1 > \frac{\text{Masse des matières premières}}{\text{Masse des matières premières} + \text{Masse du fluide de compression}} \geq 0.5$$

2. Procédé de production d'un polymère selon la revendication 1, dans lequel la mise en contact du fluide de compression et des matières premières contenant le monomère polymérisable à ouverture de cycle fait fondre le monomère polymérisable à ouverture de cycle.

3. Procédé de production d'un polymère selon la revendication 1 ou 2, dans lequel un taux de polymérisation du monomère polymérisable à ouverture de cycle est de 97 % en mole or plus.

4. Procédé de production d'un polymère selon l'une quelconque des revendications 1 à 3, dans lequel le polymère présente un poids moléculaire moyen pondéral de 12000 ou plus calculé en fonction d'une mesure de chromatographie par perméation de gel (CPG).

5. Procédé de production d'un polymère selon l'une quelconque des revendications 1 à 4, dans lequel le fluide de compression contient du dioxyde de carbone.

6. Procédé de production d'un polymère selon l'une quelconque des revendications 1 à 5, dans lequel le monomère polymérisable à ouverture de cycle est un monomère comportant une structure cyclique contenant une liaison d'ester à l'intérieur de celle-ci.

7. Procédé de production d'un polymère selon l'une quelconque des revendications 1 à 6, dans lequel une limite supérieure d'une température pendant la polymérisation à ouverture de cycle en (i) est de 100 °C.

8. Procédé de production d'un polymère, comprenant :

   (i) la fourniture et la mise en contact en continu d'un fluide de compression et de matières premières constituées d'un monomère polymérisable à ouverture de cycle et d'un amorceur dans les conditions suivantes, pour ainsi permettre au monomère polymérisable à ouverture de cycle d'effectuer une polymérisation à ouverture de cycle en présence d'un catalyseur de métal et de générer en continu un polymère.

$$1 > \frac{\text{Vitesse d'alimentation des matières premières (g/min)}}{\text{Vitesse d'alimentation des matières premières (g/min)} + \text{Vitesse d'alimentation du fluide de compression g/min)}} \geq 0.5$$

9. Procédé de production d'un polymère selon la revendication 8, comprenant en outre :

(ii) le mélange continu d'au moins deux polymères contenant le polymère obtenu en (i) en présence du fluide de compression.

10. Procédé de production d'un polymère selon la revendication 9,

dans lequel au moins deux polymères contiennent un premier polymère et un deuxième polymère, le premier polymère étant obtenu par une polymérisation à ouverture de cycle d'un premier monomère polymérisable à ouverture de cycle et le deuxième polymère étant obtenu par une polymérisation à ouverture de cycle d'un deuxième monomère polymérisable à ouverture de cycle, et

le premier monomère polymérisable à ouverture de cycle et le deuxième monomère polymérisable à ouverture de cycle étant des isomères optiques l'un par rapport à l'autre.

11. Procédé de production d'un polymère selon la revendication 8, comprenant en outre :

(iii) la mise en contact en continu du polymère obtenu par la polymérisation à ouverture de cycle du monomère polymérisable à ouverture de cycle en (i) et d'un autre monomère polymérisable à ouverture de cycle, pour ainsi permettre au polymère et à l'autre monomère polymérisable à ouverture de cycle d'effectuer la polymérisation.

# FIG. 1

# FIG. 2

# FIG. 3

# FIG. 4

# FIG. 5

# FIG. 6A

## FIG. 6B

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8259676 A
- JP 2009001614 A
- JP 47015526 B
- JP 47015527 B
- JP 47015528 B
- JP 47015533 B
- JP 47033166 A

**Non-patent literature cited in the description**

- **GANAPATHY, H. S. ; HWANG, H. S. ; JEONG, Y. T. ; LEE, W-T. ; LIM, K. T.** *Eur Polym J.,* 2007, vol. 43 (1), 119-126